(19) Europäisches Patentamt
European Patent Office
Office européen des brevets

(11) **EP 4 647 893 A1**

(12) **EUROPEAN PATENT APPLICATION**

(43) Date of publication:
**12.11.2025 Bulletin 2025/46**

(21) Application number: **25173981.9**

(22) Date of filing: **02.05.2025**

(51) International Patent Classification (IPC):
**G06F 7/57** (2006.01)    **G06N 20/00** (2019.01)

(52) Cooperative Patent Classification (CPC):
**G06F 7/57; G06F 17/16; G06N 3/0495;
G06N 3/063; G06N 20/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **06.05.2024 US 202418656224**

(71) Applicant: **Avago Technologies International
Sales
Pte. Limited
Singapore 768923 (SG)**

(72) Inventors:
• **Mombers, Friederich Jean-Baptiste Michel
San Jose, CA 95133 (US)**
• **Huang, Ding-Jie
San Jose, CA 95129 (US)**

(74) Representative: **Grünecker Patent- und
Rechtsanwälte
PartG mbB
Leopoldstraße 4
80802 München (DE)**

(54) **SPARSE TENSOR PROCESSING IN A MACHINE LEARNING ACCELERATOR**

(57)     In an example, a processor for machine learning calculations is described. An adapter input circuit is operable to receive an input tensor. The adapter input circuit includes channels. A first channel of the channels is operable to process samples of the input tensor to generate pre-processed samples and to obtain locations of the samples. A location processor, coupled to the first channel, is operable to determine output locations in response to the locations. An arithmetic logic unit (ALU), coupled to the channels, is operable to calculate output samples from the pre-processed samples. An adapter output circuit, coupled to the location processor and the ALU, operable to process the output locations and the output samples to generate an output tensor.

FIG. 1

**Description**

BACKGROUND

In machine learning applications, a processing engine is used to accelerate machine learning (ML) graph calculations (referred to as inference). The processing engine can be part of a hardware accelerator to which an external system, such as any type of computing device, offloads ML calculations. ML graphs manipulate tensors of data exchanged between nodes as the result of some defined operations. A tensor is an array of numerical values. A tensor includes a shape, which defines the number of dimensions (referred to as rank) and the size of the tensor along each of the dimensions. For example, a rank-2 tensor includes two dimensions (H x W locations), a rank-3 tensor includes three dimensions (H x W x C locations), a rank-6 tensor includes six dimensions (J x M x K x H x W x C locations) and so on. A tensor can include values at various locations within its shape. Tensor values can be elements, samples, features, etc. of the data they represent (e.g., image data).

The most common form of a tensor is a dense form, where the tensor records elements at all tensor locations (regardless of value). Another form of tensor is a sparse form. A sparse tensor includes two data structures: a zero-point value, which may be a scalar value, and an array of duets {location, value}. The array {location, value} records values at corresponding locations for all locations that are not of zero-point value. The zero-point value can be any numerical value and is not necessarily of zero value. The idea behind sparse tensors is to recognize that in some scenarios most tensor samples lie around a common value (the zero-point value) and that compression can be achieved by not recording those samples, which are assumed to take the zero-point value, and only record the remaining samples through their location and value.

In an ML application, when processing a graph, there can be a mix of some tensors being sparse tensors and other tensors being dense tensors. Not all tensors are candidates for being compressed into sparse form depending on the distribution of values and the clamping noise effect on the overall processing accuracy. Further, some ML tensor operations may not express themselves cleanly into sparse form (e.g., a tensor axis transposition) and would benefit from being handled in the dense form. There is a need for efficient processing of sparse tensors, which minimizes the number of element computations (to reduce processing time and power consumption), minimizes data footprint (to reduce storage size and access bandwidth), and efficiently maps to an arbitrary large number of processing units (to improve overall calculation speed). There is further need of efficient conversion of tensors between sparse and dense forms.

SUMMARY

In an embodiment, a processor for machine learning calculations is described. An adapter input circuit is operable to receive an input tensor. The adapter input circuit includes channels. A first channel of the channels is operable to process samples of the input tensor to generate pre-processed samples and to obtain locations of the samples. A location processor, coupled to the first channel, is operable to determine output locations in response to the locations. An arithmetic logic unit (ALU), coupled to the channels, is operable to calculate output samples from the pre-processed samples. An adapter output circuit, coupled to the location processor and the ALU, operable to process the output locations and the output samples to generate an output tensor.

In an embodiment, a processor for machine learning calcuations is described. The ML processor includes location grabbers to obtain tensor locations. The ML processor includes a location processor, coupled to outputs of the location grabbers, to generate output locations from the tensor locations. The ML processor includes sample grabbers to obtain tensor samples. The ML processor includes expanders, coupled to outputs of the sample grabbers, to align the tensor samples with the output locations. The ML processor includes arithmetic logic units (ALUs), coupled to outputs of the expanders, to calculate output samples from aligned tensor samples. The ML processor includes an adapter output circuit, coupled to outputs of the ALUs and an output of the location processor, to generate an output tensor from the output locations and the output samples.

In an embodiment, a method of processing an input tensor at a processor is described. The method includes receiving at a first channel of channels in an adapter input circuit, the input tensor, the first channel processing samples of the input tensor to generate pre-processed samples, the first channel obtaining locations of the samples. The method includes determining, by a location processor coupled to the first channel, output locations in response to the locations. The method includes calculating, by an arithmetic logic unit (ALU) coupled to the channels, output samples from the pre-processed samples. The method includes processing, by an adapter output circuit coupled to the location processor and the ALU, the output locations and the output samples to generate an output tensor.

BRIEF DESCRIPTION OF THE DRAWINGS

Fig. 1 is a block diagram depicting a device operable to use machine learning (ML) techniques according to some embodiments.

Fig. 2A is a block diagram depicting tensors according to some embodiments.

Fig. 2B is a block diagram depicting a tensor data structure according to some embodiments.

Fig. 3 is a block diagram depicting an ML processor according to some embodiments.

Fig. 4 is a block diagram depicting a sparse/dense adapter input circuit according to some embodiments.

Fig. 5 is a block diagram depicting a location grabber according to some embodiments.

Fig. 6 is a block diagram depicting a sample grabber according to some embodiments.

Fig. 7 is a block diagram depicting a location processor according to some embodiments.

Fig. 8 is a block diagram depicting an expander circuit according to some embodiments.

Fig. 9 is a block diagram depicting a buffer storing a sequence of tensor elements according to some embodiments.

Fig. 10 is a block diagram depicting a sparse/dense adapter output circuit according to some embodiments.

Fig. 11 is a block diagram depicting drop-box according to some embodiments.

Fig. 12 is a block diagram depicting a densifier according to some embodiments.

Fig. 13 is a block diagram depicting an output generator according to some embodiments.

Fig. 14 is a flow diagram depicting a method of processing input tensors at an ML processor according to some embodiments.

Fig. 15A is a flow diagram depicting a method of converting a sparse tensor into a dense tensor according to some embodiments.

Fig. 15B is a flow diagram depicting a method of converting a dense tensor into a sparse tensor according to some embodiments.

Fig. 16 is a flow diagram depicting a method of fully expanding sparse input tensors for certain types of calculations that require dense tensors according to some embodiments.

Fig. 17 is a flow diagram depicting a method of processing sparse tensors at an ML processor according to some embodiments.

Fig. 18A is a block diagram illustrating three example sparse input tensors.

Fig. 18B is a block diagram illustrating the three sparse input tensors of Fig. 18A as processed by an ML processor.

## DETAILED DESCRIPTION

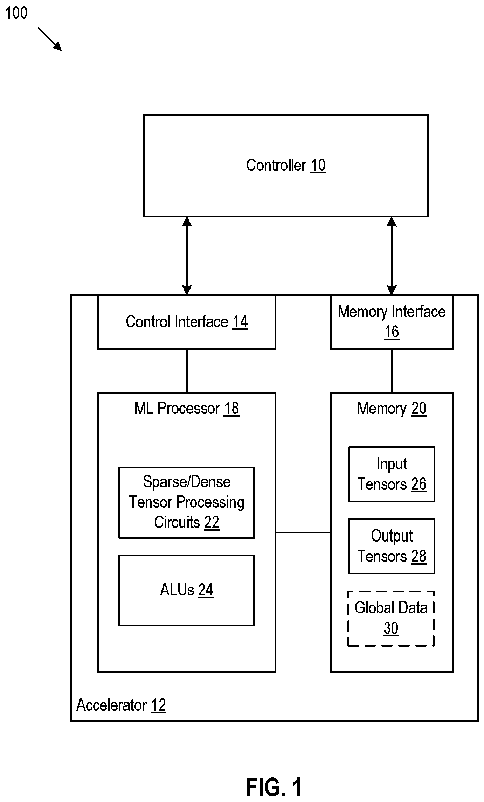

Fig. 1 is a block diagram depicting a device 100 operable to use machine learning (ML) techniques according to embodiments. Device 100 includes a controller 10 and an accelerator 12. Controller 10 can be any type of circuit or system that uses accelerator 12 to offload ML calculations. For example, controller 10 can comprise hardware (e.g., a processor, memory, etc.) on which executes software that is operable to offload ML calculations to accelerator 12. Accelerator 12 includes a control interface 14, a memory interface 16, an ML processor 18, and a memory 20. Controller 10 is coupled to accelerator 12 through control interface 14 and memory interface 16. ML processor 18 is coupled to control interface 14. Memory 20 is coupled to memory interface 16. Controller 10 can control ML processor 16 through control interface 14. Controller 10 can write data to, and read data from, memory 20 through memory interface 16. ML processor 18 writes data to, and reads data from, memory 20.

In operation, controller 10 stores data in memory 20, which includes input tensors 26. A tensor may be an array of elements of the same type, where the array has at least one dimension. An input tensor may be a tensor input to ML processor 18. Tensors can be stored in memory 20 (e.g., input tensors 26) using data structures, as described below. Controller 10 can optionally store global data 30 in memory 20. Global data 30 can includes metadata describing input tensors 26 ("tensor metadata"), as described below. Memory 20 can be any type of circuit for storing data, such as random-access memory (RAM). Input tensors 26 can include sparse tensors, dense tensors, or a combination of sparse and dense tensors. Sparse and dense tensors are described below.

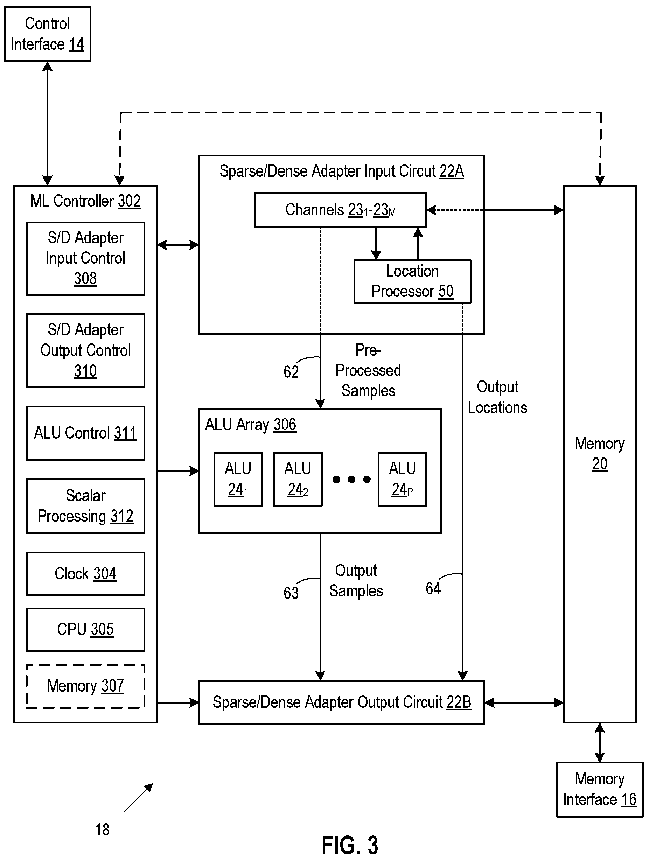

ML processor 18 may be a processor that performs machine learning calculations. ML processor 18 includes sparse/dense tensor processing circuits 22 and arithmetic logic units (ALUs) 24. ML processor 18 reads input tensors 26 from memory, performs calculations on input tensors 26, and writes output tensors 28 to memory 20. In some cases, ML processor 18 can generate intermediate tensors during its calculations, which are written to and read from memory 20. Sparse/dense tensor processing circuits 22 read tensors from memory 20, optionally process the tensors (e.g., decompress sparse tensors into dense tensors and/or compress dense tensors into sparse tensors), and write tensors to memory 20. Sparse/dense processing circuits 22 include an adapter input circuit and an adapter output circuit. The adapter input circuit may be a circuit that receives data from memory 20, processes the data, and supplies data as output. An embodiment of the adapter input circuit is sparse/dense adapter input circuit 22A (Fig. 3), which reads input tensors 26 from memory 20, processes input tensors 26, supplies tensor samples to ALUs 24, and supplies tensor locations to the adapter output circuit. Tensor locations may be locations of tensors. Tensor samples may be samples of tensors. ALUs 24 perform calculations on the tensor samples (e.g., addition, multiplication, exponentiation, etc.). The adapter output circuit may be a circuit that receives data, processes the data, and supplies data as output to memory 20. An embodiment of the adapter output circuit is sparse/dense adapter output circuit 22B (Fig. 3), which receives tensor samples output by ALUs 24 and tensor locations output by sparse/dense adapter input circuit 22A, processes the tensor samples and tensor locations into output tensors 28, and stores output tensors 28 in memory 20. An output tensor may be a tensor output by ML processor 18. Controller 10 can read output tensors 28 from memory 20 through memory interface 16. Output tensors 28 can include sparse tensors, dense tensors, or a combination of sparse and dense tensors.

Sparse/dense tensor processing circuits 22 comprise circuitry operable to: 1) process sparse tensors in their compressed form and perform just-in-place decompression into dense form as required; 2) process the resulting zero-point output only once, separate from sparse tensor samples; 3) extend the decompression logic to work on sets of tensor samples in parallel to more effectively feed ALUs 24; and 4) provide the option to either compress output of ALUs 24 into sparse tensors or decompress output of ALUs 24 into dense tensors. Sparse/dense tensor processing circuits 22 and operation thereof are discussed below. Such operations minimize the number of tensor sample computations, which reduces processing time and power consumption of ML processor 18. Such operations minimize data footprint by obviating the need to externally decompress sparse tensors into dense tensors (e.g., by controller 10), which saves storage space in memory 20 and/or requires less memory 20, as well as reduces bandwidth required between ML processor 18 and memory 20 and controller 10 and memory 20. Sparse/dense tensor processing circuits 22 can scale with any number of ALUs 24 to achieve desired calculation speed. Device 100 is one example application for sparse/dense tensor processing circuits 22 and those skilled in the art will appreciate that such circuits 22 can be employed for tensor processing as described herein in any of a myriad of devices having various structures.

Device 100 can have any of several physical implementations. For example, controller 10 can be any device needing to offload ML calculations and accelerator 12 can implemented on an integrated circuit (IC) of the device or external to the device. In another example, ML processor 18 is implemented as an IC and memory 20 is implemented in separate IC(s) connected to ML processor 18. In another example, ML processor 18 can be implemented in an IC having some memory 20 (e.g., for storing tensor metadata) and ML processor 18 can be connected to separate IC(s) implementing another portion of memory 20 (e.g., for storing tensors). Those skilled in the art will appreciate that there can be a myriad of physical implementations for device 100.

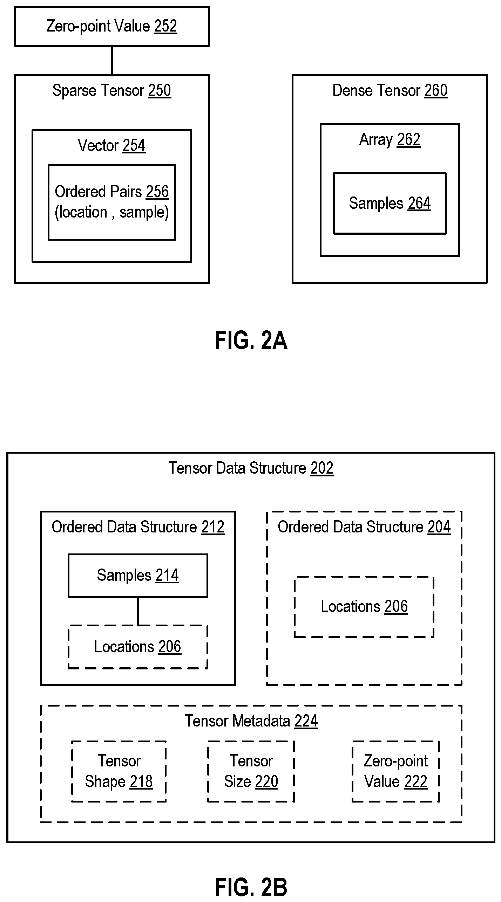

Fig. 2A is a block diagram depicting tensors according to embodiments. A tensor represents some quantum of data, such as an image. A tensor has a rank (tensor rank), which is the number of dimensions of its array of elements. A tensor has a shape (tensor shape), which is the number of element locations along each dimension. Each tensor shape has a set of discrete coordinates, referred to herein as locations. A tensor has a size (tensor size), which is the total number of elements in its array. A tensor's rank and shape can fit the quantum of data being represented. For example, an image can include channels, where each channel is a two-dimensional array of samples having a common height and a common width. A tensor representing such an image can have a rank of three (dimensions representing channel, width, height) and a shape with locations along the channel, width, and height dimensions that fit the image. A rank-1 tensor has one dimension and may be referred to as a vector. A rank-2 tensor has two dimensions and may be referred to as a matrix. Some ML frameworks, such as TENSORFLOW, include the notion of a rank-0 tensor, which is a single value or scalar. A rank-0 tensor will be referred to herein as a scalar.

A tensor can have a dense form ("dense tensor") or sparse form ("sparse tensor"). A dense tensor 260 has an array 262 of samples 264. Array 262 includes at least one dimension, which defines the rank of dense tensor 260. The elements of dense tensor 260 are referred to as samples 264, which quantify attributes in some data quantum (e.g., image samples). Samples 264 can be scalars (e.g., integers or real numbers) or n-tuples of scalars (n > 1) (e.g., complex numbers). The size of dense tensor 260 is the product of the number of locations along each dimension of its shape. That is, dense tensor 260 includes a sample value 264 for each location in its shape. The locations are encoded by the indices of array 262. The locations implied by a dense tensor, which includes all locations of the tensor shape, are referred to as dense locations and the corresponding samples are dense samples. Alternatively, locations/samples can be referred to as being dense within the tensor shape.

A sparse tensor 250 has a vector 254 of ordered pairs 256 (i.e., 2-tuples). Each ordered pair 256 includes a location and a sample, i.e., (location, sample). Sparse tensor 250 is associated with a zero-point value 252. The set of locations in vector 254, $\{locations\}_v$, includes less than all locations in the shape of sparse tensor 250. That is, if $\{locations\}$ is the set of locations in the tensor shape, then $\{locations\}_v$ of vector 254 is a strict subset of $\{locations\}$. It is implied that those of $\{locations\}$ not in $\{locations\}_v$ have zero-point value 252. Vector 254 includes a set of samples, $\{samples\}_v$. The samples can be scalars or n-tuples of scalars (n > 1) (e.g., complex numbers). Zero-point value 252 has the same type as the samples. Note that zero-point value 252 is not necessarily of zero value. Sparse tensor 250 can represent some data quantum having many attributes with a common value. Zero-point value 252 can represent the common value. Those attributes in the data quantum having values other than the common value are represented by ordered pairs 256 in vector 254. In contrast to dense tensor 260, the size of sparse tensor 250 is less than the product of the number of locations along each dimension of its shape. Compression can be achieved using sparse tensor 250 by not recording samples of those attributes in the data quantum having zero-point value 252. The set $\{locations\}_v$ can be referred to as sparse locations and

the set {samples}$_V$ can be referred to as sparse samples. Alternatively, locations/samples can be referred to as being sparse within the tensor shape.

Fig. 2B is a block diagram depicting a tensor data structure 202 according to embodiments. Input tensors 26 and output tensors 28 are data structures 202 stored in memory 20 that encode tensors, each of which can be either sparse tensor 250 or dense tensor 260. To encode dense tensor 260, tensor data structure 202 includes an ordered data structure 212 that stores samples 214. Ordered data structure 212 can be any type of data structure that stores samples 214 in order. Samples 214 have a data type capable of storing samples 264 (e.g., integers, fixed-point types, floating-point types, etc.). The order imposed by ordered data structure 212 can be an ascendant location order or a descendant location order. For dense tensor 260, locations are not explicitly stored, but are rather implied from the order of data structure 212.

To encode sparse tensor 250, tensor data structure 202 explicitly stores locations 206. Locations 206 have a data type capable of storing {locations}$_V$ in vector 254. Samples 214 in this case have a data type capable of storing {samples}$_V$ in vector 254. Ordered data structure 212 can store locations 206 in association with samples 214 to maintain (location, sample) relationships. The order imposed by ordered data structure 212 can be an ascendant location order or a descendant location order. Alternatively, tensor data structure 202 can include a separate ordered data structure 204 for storing only locations 206. Ordered data structure 212 in that case stores only samples 214. The order imposed by ordered data structure 204 can be an ascendant location order or a descendant location order. Samples 214 in ordered data structure 212 are ordered accordingly to maintain (location, sample) relationships.

Tensor data structure 202 can optionally include tensor metadata 224. Tensor metadata 224 can include at least one of tensor shape 218, tensor size 220, and zero-point value 222. Tensor shape 218 has a data type capable of storing the shape of dense tensor 260 or sparse tensor 250 (e.g., an array or vector). Tensor size 220 has a data type capable of storing the size of dense tensor 260 or sparse tensor 250 (e.g., a scalar type). Zero-point value 222 has a data type capable of storing zero-point value 252 of sparse tensor 250 (e.g., a scalar type). Alternatively, some or all of tensor metadata 224 can be stored as global data 30 separate from tensor data structures 202 that encode input tensors 26 and output tensors 28. In another alternative, some or all of tensor metadata 224 can be received by ML processor 18 via control interface 14 and stored locally within ML processor 18.

For a sparse tensor, locations 206 can be stored in a selected format. In a coordinate list format (known as a COO format), a location is indicated through an r-tuple, where r is the rank of the tensor. For example, a rank-6 sparse tensor can include locations in the form of (index_J, index_M, index_K, index_H, index_W, index_C), where each of the tuple elements is a scalar value indicating the coordinates along the matching axis of the tensor shape. This is a common format used to represent sparse tensors and has been adopted by some ML frameworks, such as TENSORFLOW. In a position (POS) format, each location is a scalar value. The POS format assumes an agreed-upon axis-ordering when scanning through the tensor shape such that there is a one-to-one equivalence between the r-tuple of the COO format and a single scalar value referred as a "position." In the POS format, a position indicates a location inside the tensor. The POS format exhibits reduced storage cost compared to the COO format (e.g., storing scalars instead of arrays/vectors).

In the description herein, locations 206 can be in COO format or POS format. In an embodiment, tensor data structure 202 encodes a tensor using a strictly ascendant order of locations, which is a natural way to handle sparse tensors and favored by ML frameworks such as TENSORFLOW. That is, the absolute minimum of locations 206 is at a lowest index of an ordered data structure, and the absolute maximum of locations 206 is at a highest index of the ordered data structure. For a sparse tensor, samples 214 are stored in order of their corresponding locations 206. For a dense tensor, locations 206 are omitted, but samples 214 are stored by ascendant order of corresponding locations. In other embodiments, tensor data structure 202 encodes a tensor using a strictly descendant order of locations. Some operations and logic described herein assume ascendant order (e.g., use of minimum and less-than operators). If descendant order is used instead, such operations and logic would use maximum and larger-than operators. Unless otherwise specified, for purposes of clarity by example, the embodiments below assume an ascendant order of locations.

In some examples described herein, tensors have rank of three representing channel, width, and height of the data quantum they represent (e.g., image data). The locations are in the form of {C (channel), W (width), H (height)}. The scan order through the tensor's locations, which is used to determine position in the POS format, is assumed to be the convention of channel (C) first followed by width (W) and then followed by height (H). Where mentioned, the rank-3 tensors are used for purposes of clarity by example and tensors can have a rank different than three.

Fig. 3 is a block diagram depicting ML processor 18 according to embodiments. Control interface 14 and memory interface 16 are shown for context and are not included in ML processor 18. ML processor 18 includes ML controller 302, sparse/dense adapter input circuit 22A, ALU array 306, sparse/dense adapter output circuit 22B(, and memory 20. Thus, ML processor 18 can include an adapter input circuit, which may be sparse/dense adapter input circuit 22A, and an adapter output circuit, which may be sparse/dense adapter output circuit 22B. Sparse/dense adapter input circuit 22A and sparse/dense adapter output circuit 22B are portions of sparse/dense tensor processing circuits 22 (Fig. 1). ALU array 306 includes ALUs $24_1$, $24_2$, ..., $24_P$, where P is an integer greater than zero (referred to as ALUs $24_1$...$24_P$ or ALUs 24). ML controller 302 includes sparse/dense (S/D) adapter input control 308, S/D adapter output control 310, ALU control 311, a scalar processing 312, and a clock 304. In embodiments, ML controller 302 can include a central processing unit (CPU) 305. In embodiments, ML controller 302 can include memory 307.

In operation, sparse/dense adapter input circuit 22A reads from input tensors 26 stored in memory 20, where input tensors 26 include N tensors, N being an integer greater than zero. Clock 304 generates a base clock used by ALU array 306. Sparse/dense adapter input circuit 22A consumes the N input tensors from memory 20 over multiple base clock cycles. Sparse/dense adapter input circuit 22A includes channels $23_1$, $23_2$, ... , $23_M$ (also referred to as channels $23_1...23_M$ or channels 23, where $M \geq N$). Each channel 23 comprises circuitry, as described further below. Channels $23_1...23_N$ process the N input tensors. Those channels $23_1...23_N$ processing input tensors 26 are "used channels." If $M > N$, some of channels 23 are "unused channels." Unused channels can be disabled. In embodiments, one or more unused channels can be enabled for special purposes, as described in embodiments below.

Tensor metadata for input tensors 26 can be stored in memory 20, provided via control interface 14 (e.g., stored in a memory 307), or a combination thereof. In embodiments, CPU 305 is configured to process tensor metadata and initialize S/D adapter input control 308, S/D adapter output control 310, ALU control 311, and scalar processing 312. CPU 305 can store tensor metadata in memory 307. In addition, or as an alternative, CPU 305 can include an interface with memory 20 for managing tensor metadata. While CPU 305 and memory 307 are shown as part of ML controller 302 in ML processor 18, CPU 305 and memory 307 can be external to ML processor 18 (e.g., on accelerator 12 connected to ML processor 18).

Sparse/dense adapter input circuit 22A includes a location processor 50. A location processor may be a processor that receives tensor locations as input and supplies tensor locations as output. Each channel $23_1...23_N$ sends locations to location processor 50. The locations output from channel $23_k$ ($k \in \{1, 2, ..., N\}$) are those that have corresponding samples read from the kth input tensor. For a sparse tensor, channel $23_k$ reads the locations from the kth input tensor in memory 20. These locations are sparse within the tensor shape. For a dense tensor, channel $23_k$ generates the locations autonomously. These locations are dense within the tensor shape. Location processor 50 determines a union of the location sets from channels $23_1...23_N$. If any set of locations is dense, then the union set is dense. If all location sets are sparse, then the union set can be sparse. Location processor 50 supplies the union set of locations on output 64 ("output locations"). The union set is also referred to as {output locations}.

Location processor 50 generates a control signal for channels 23. The control signal encodes, for each channel $23_1...23_N$, alignment of the samples to the output locations. A channel $23_k$ uses the control signal to align the tensor samples to their corresponding locations in the output locations. For a sparse tensor, the samples received by a channel $23_k$ are $\{samples\}_v$ having $\{locations\}_v$. The set of output locations, {output locations}, is a superset of $\{locations\}_v$. Let $\{locations\}_{diff}$ be the set difference of {output locations} and $\{locations\}_v$. In case of a sparse tensor, channel $23_k$ expands $\{samples\}_v$ to include a sample of the sparse tensor's zero-point value for each location in $\{locations\}_{diff}$. The expansion performed by channel $23_k$ for a sparse tensor can be partial or complete. If any input tensor is dense, then {output locations} includes all locations in the tensor shape, which results in a complete expansion of the sparse tensor in channel $23_k$. If all input tensors are sparse, then {output locations} can include less than all locations in the tensor shape, which results in only a partial expansion of the sparse tensor in channel $23_k$. Expansion of a sparse tensor is also referred to herein as decompression. Each channel $23_1...23_N$ outputs pre-processed samples on output 62. Pre-processed samples may be tensor samples output by the adapter input circuit. In embodiments, the pre-processed samples are the aligned and optionally expanded samples of the N input tensors in channels $23_1...23_N$.

Sparse/dense adapter input circuit 22A supplies pre-processed samples from channels $23_1...23_N$ on an output 62 to ALU array 306. ALU array 306 performs calculations on the pre-processed samples to generate output samples. For tensor locations that include zero-point values across all input tensors (i.e., when all input tensors are sparse), scalar processing 312 performs a single scalar operation that takes as its inputs the zero-point values for each of the N sparse tensors and generates a resulting output zero-point value for the output tensor. Sparse/dense adapter input circuit 22A receives control data from S/D adapter input control 308.

Sparse/dense adapter output circuit 22B receives the output samples from ALU array 306 on an output 63 and output locations from sparse/dense adapter input circuit 22A on output 64. Sparse/dense adapter output circuit 22B can generate an output tensor having the dense format or the sparse format based on the output samples and the output locations. Sparse/dense adapter output circuit 22B can also drop output samples that are outside of a predefined range (e.g., to implement thresholding). Sparse/dense adapter output circuit 22B receives control data from S/D adapter output control 310. Sparse/dense adapter output circuit 22B writes an output tensor to memory 20.

The operations performed by ALUs 24 in ALU array 306 can be controlled by ALU control 311 (e.g., addition, multiplication, exponentiation, etc.). If all input tensors are sparse, scalar processing 312 computes itself, or controls computation of, a zero-point value for the output tensor. For example, scalar processing 312 can be a scalar processor that computes the output zero-point value itself. In another example, scalar processing 312 can, prior to processing the N sparse tensors, control an ALU 24 to calculate an output zero-point value. In another example, scalar processing 312 can be or control an external processor to calculate the output zero-point value (e.g., CPU 305). In general, scalar processing 312 can compute an output zero-point value asynchronous with processing of the N input tensors.

Clock 304 provides one or more clock signals (including the base clock signal) for synchronous logic in sparse/dense adapter input circuit 22A, sparse/dense adapter output circuit 2B, and for ALU array 306. Sparse/dense adapter input circuit 22A and sparse/dense adapter output circuit 22B can include a combination of synchronous and asynchronous digital logic as described in embodiments below. Memory 20 can include multiple ports for servicing multiple components or can include a memory controller that arbitrates access among the multiple components.

Sparse/dense adapter input circuit 22A can obtain tensor locations and tensor samples, and can generate pre-processed samples and output locations, using P-element vectors for each base clock cycle. This allows ALUs $24_1...24_P$ to perform calculations on pre-processed samples in parallel. Likewise, sparse/dense adapter output circuit 22B can handle output samples and output locations using P-element vectors for each base clock cycle.

ALU array 306 is designed to accommodate all basic ML operations found in graphs and that are defined by ML frameworks such as TENSORFLOW. Considering large data sets typically carried by ML tensors, and the inherent parallelism of the computations involved, ALU array 306 can include many ALUs 24 (P ALUs 24 in the embodiments) all performing the same operations on individual samples. While an ALU array by itself (or with some input/output buffers for smoothing) is efficient for dense tensor processing, an ALU array cannot by itself process sparse tensors because of the location misalignment between samples of the input tensors. One technique to address this problem is to externally decompress the sparse tensors into dense tensors (by externally it is meant external to ML processor 18, such as by controller 10, or external to the tensor processing pipeline). Such external decompression, however, requires extra calculation passes and is not computationally/power efficient as some ALUs will inherently be operating on zero-point values at some points in time, reproducing the same calculations and results over and over in time.

In embodiments, sparse/dense adapter input circuit 22A performs sample alignment and potential decompression (either complete or partial) in-line with the input tensor processing, which allows ALU array 306 to efficiently process any input combinations of dense versus sparse tensors. Sparse/dense adapter output circuit 22B can perform tensor compression in-line with the output tensor processing. For example, a first input tensor can be sparse, a second input tensor can be dense, and the output tensor can be in dense or sparse format. Alternatively, all input tensors can be dense and the output tensor can be dense or sparse. In another alternative, all input tensors can be sparse and the output tensor can be dense or sparse.

One special use case is for a single input tensor that is in sparse format, output tensor in dense format, and ALU array 306 configured to perform a pass-through operation. In this case, ML processor 18 functions as a decompressor, which can decompress sparse input tensors into dense form for further processing in the dense form. Another special use case is for a single input tensor that is in the dense format, output tensor in the sparse format (based on a selected zero-point value), and ALU array 306 configured to perform a pass-through operation. In this case, ML processor 18 functions as a compressor, which can compress dense input tensors into sparse form for further processing in the sparse form.

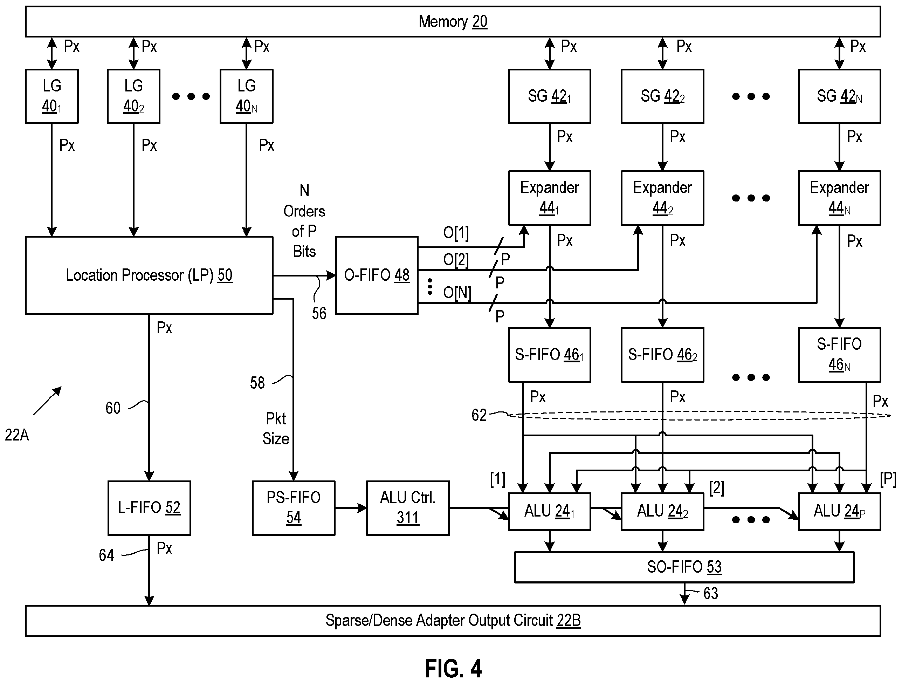

Fig. 4 is a block diagram depicting a sparse/dense adapter input circuit 22A according to embodiments. For purposes of clarity by example, Fig. 4 assumes M = N (i.e., the number of channels 23 is the same as the number of input tensors). Memory 20, ALU control 311, ALUs $24_1...24_P$, and sparse/dense adapter output circuit 22B are shown for context and are not part of sparse/dense adapter input circuit 22A. Various control inputs and clock inputs from ML controller 302 are omitted from Fig. 4 for clarity but are discussed in detailed diagrams below. Sparse/dense adapter input circuit 22A includes location grabbers (LGs) $40_1, 40_2, ..., 40_N$ (also referred to as LGs $40_1...40_N$ or LGs 40), location comparator (LC) 50, location first-in-first-out circuit (L-FIFO) 52, packet-size FIFO (PS-FIFO) 54, and order FIFO (O-FIFO) 48. Sparse/dense adapter input circuit 22A further includes sample grabbers (SGs) $42_1, 42_2, ..., 42_N$ (also referred to as SGs $42_1...42_N$ or SGs 42), expanders $44_1, 44_2, ..., 42_N$ (also referred to as expanders $44_1...44_N$ or expanders 44), sample FIFOs (S-FIFOs) $46_1, 46_2, ..., 46_N$ (also referred to as S-FIFOs $46_1...46_N$ or S-FIFOs 46), and sample output FIFO (SO-FIFO) 53. A location grabber may be a circuit that obtains or generates tensor locations. A sample grabber may be a circuit that obtains or generates tensor samples. An expander may be a circuit that manipulates tensor samples based on tensor locations.

In the description sparse/dense adapter input circuit 22A and its components below, N input tensors are processed using N channels, where N is an integer and N > 0. The description can refer to a kth one of the N channels, where $k \in \{1, 2, ..., N\}$. The N channels can process P tensor elements per base clock cycle, where P is an integer and P > 0. The description can refer to an mth one of P tensor elements, where $m \in \{1, 2, ..., P\}$.

LGs 40 obtain locations associated with samples of input tensors stored in memory 20. Each channel $23_1...23_N$ includes a respective one of LGs $40_1...40_N$. In embodiments, for a base clock cycle, LG $40_k$ reads or generates P locations into channel $23_k$. For a given base clock cycle, the P locations are referred to as a location vector. Locations in a location vector are in the order defined for its respective input tensor (e.g., ascendant order). In the example embodiments herein, assume a location vector $[L_1, L_2, ..., L_P]$ to be in ascendant order from $L_1$ to $L_P$. Outputs of LGs 40 are coupled to inputs of location processor (LP) 50. The output of $LG_k$ supplies a location vector $[L_1, L_2, ..., L_P]$, which can be refreshed with one or more new locations each base clock cycle (as discussed further below).

The designation "Px" in the diagram indicates a P-factor. The meaning behind the P-factor is to denote that the throughput of a given block can be scaled by a factor of P. This allows sparse/dense adapter input circuit 22A to match the throughput of ALUs $24_1...24_P$. That is, if ALU array 306 can process P samples per base clock cycle, then sparse/dense adapter input circuit 22A feeds ALU array 306 as many samples per base clock cycle to keep ALUs 24 busy. There are multiple techniques to achieve throughput multiplication by a factor of P and the choice of which technique to use is dependent on several factors, including block functionality, implementation/chip technology, and overall system performance for ML processor 18 (e.g., base clock frequency). In an embodiment, the P-factor can be achieved by frequency scaling. In this case, the hardware organization of a block is centered about processing one location/sample at a time but using a clock frequency higher than the base clock frequency used by ALUs 24. In another embodiment, P-factor can be achieved by element scaling. In this case, the hardware of the block operates at the base clock frequency but can process multiple locations/samples in one cycle of the base clock. Depending on block functionality, element scaling can mean different things. For example, a memory access unit can issue multiple memory access commands in parallel. Alternatively, if the successive locations/samples to access have consecutive addresses, then a single command can be sent, but a larger memory bus can be used to fetch more locations/samples per base clock cycle. In another example, an arithmetic unit can extend its logical functions to process more locations/samples in one cycle of the base clock. In still other embodiments, a block can use a combination of frequency scaling and element scaling can be employed to achieve the P-factor. For purposes of clarity by example, the blocks of sparse/dense adapter input circuit 22A are described as using element scaling.

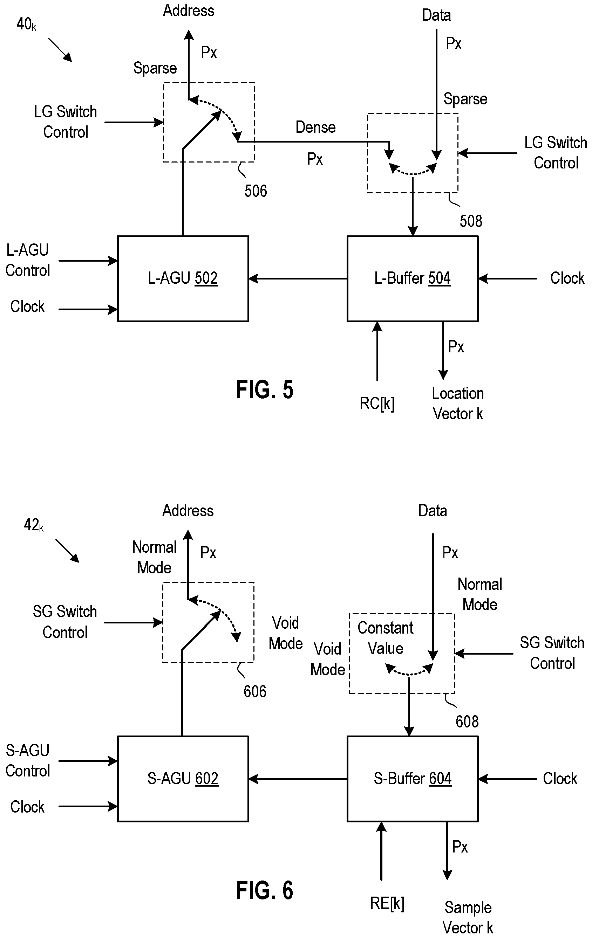

Fig. 5 is a block diagram depicting a location grabber according to embodiments. As shown in Fig. 5, LG $40_k$ includes a location address generation unit (L-AGU) 502 and a location buffer (L-Buffer) 504. An output of L-AGU 502 is coupled to a switch 506. An input of L-Buffer 504 is coupled to a switch 508. Switches 506 and 508 receive control signals (LG switch control) from S/D adapter input control 308. Switches 506 and 508 are always in the same mode, which is one of sparse or dense. In the sparse mode, switch 506 connects L-AGU 502 to an address interface of memory 20 and switch 508 connects L-Buffer 504 to a data interface of memory 20. In the dense mode, switches 506 and 508 connect L-AGU 502 to L-Buffer 504. L-AGU 502 receives a control signal (L-AGU control) from S/D adapter input control 308 and a clock signal from clock 304. L-Buffer 504 receives a clock signal from clock 304.

When S/D adapter input control 308 dictates the sparse mode, L-AGU 502 generates addresses in memory 20 for reading locations from the kth input tensor. S/D adapter input control 308 can specify initial address(es), tensor shape, tensor size, etc. L-Buffer 504 stores the locations read from the kth input tensor. L-Buffer 504 can store multiple location vectors (e.g., have a multiple of P storage locations). However, L-Buffer 504 outputs one location vector $[L_1, L_2, ..., L_P]$ (shown as location vector k).

When S/D adapter input control 308 dictates the dense mode, the kth input tensor is a dense tensor and explicit locations are not stored. Instead, L-AGU 502 generates locations by iterating sequentially from the first location to the last location as dictated by the tensor shape. Further, L-AGU 502 can generate the locations in either POS format or COO format as dictated by S/D adapter input control 308. Thus, in POS format, L-AGU 502 generates the sequence {1, 2, 3, ..., S}, where S is the tensor size of the dense tensor. In COO format, L-AGU 502 generates a sequence of r-tuples where r is the rank of the dense tensor. For example, assume a rank-3 dense tensor in the form of [H, W, C]. Then, L-AGU 502 generates the sequence {[1, 1, 1], [1, 1, 2], ..., [1, 2, 1], [1, 2, 2], ..., [2, 1, 1], [2, 1, 2], ..., [H, W, C]}. In the dense mode, L-Buffer 504 captures the generated locations from L-AGU 502.

L-Buffer 504 accommodates for latency between L-AGU 502, memory 20, and LP 50. L-Buffer 504 is drained through control flow from LP 50, which requests locations at its own pace (as described below). Thus, L-Buffer 504 receives a request signal RC[k] from LP 50. L-Buffer 504 refreshes location vector $[L_1, L_2, ..., L_P]$ with between 0 and P new locations per base clock cycle based on the request signal RC[k]. For example, assume RC[k] calls for m new locations (m $\in$ {1, 2, ..., P}), then a refresh causes: each $L_x$ where $x \leq m$ to be discarded; each $L_y$, where $(m+1) \leq y \leq P$, to be shifted left in the location vector by m; and each $L_z$, where $(P - m + 1) \leq z \leq P$, store a new location. L-Buffer 504 can supply a control signal to L-AGU 502 to prevent overflow.

In the context of scaling by P, in embodiments, L-AGU 502 can scale its address interface with memory 20 so that P locations are returned per base clock cycle (in sparse mode). In dense mode, L-AGU 502 can generate P locations per base clock cycle. For example, in POS format, L-AGU 502 can include P counters each starting with a different phase and jumping by P. In COO format, L-AGU 502 can include P state machines iterating through the tensor dimensions with a step of P and starting with a different phase. L-Buffer 504 scales its data interface with memory 20 to receive P locations per base clock cycle.

Returning to Fig. 4, LP 50 receives N location vectors each having P locations. This effectively results in an input matrix having N x P locations, where the location vectors are the rows of the matrix. LP 50 has an output 56 coupled to an input of O-FIFO 48, an output 58 coupled to an input of PS-FIFO 54, and an output 60 coupled to an input of L-FIFO 52.

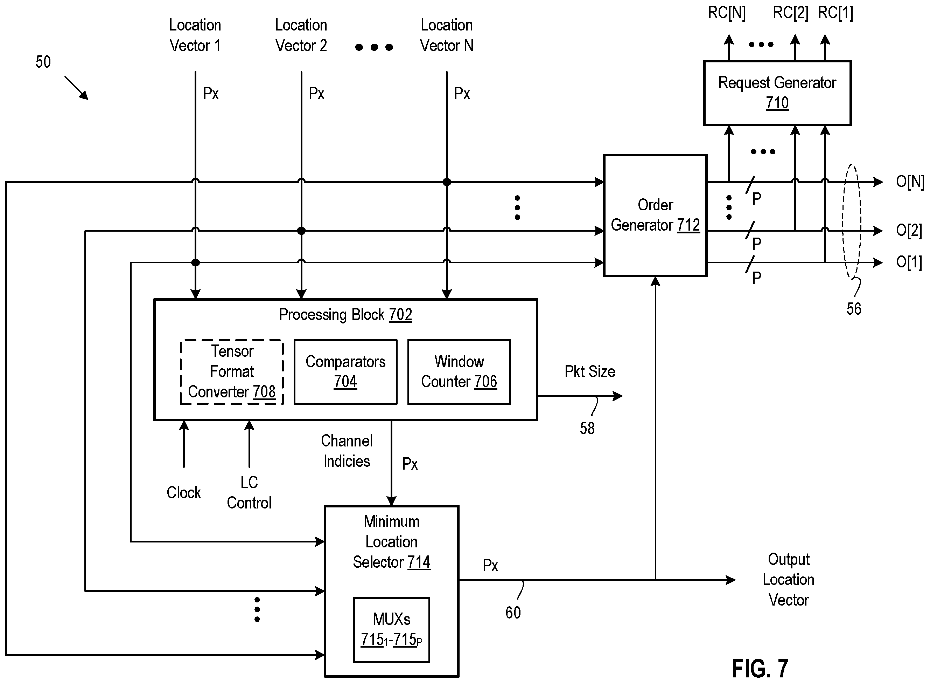

Fig. 7 is a block diagram depicting LP 50 according to embodiments. LP 50 includes a processing block 702, an order generator 712, a request generator 710, and minimum location selector 714. Processing block 702 receives the input matrix. Processing block 702 uses comparators 704 to find the P smallest locations in the input matrix (the set {minimumlocations}). By construction, the elements of {minimum locations} are distinct. Further, {minimum locations} can be spread non-uniformly across the N location vectors. Thus, a location vector can have multiple elements of {minimum locations}. Stated more generally, a kth location vector can include between zero and P minimum locations. Note further that the same minimum location can appear in multiple of the N location vectors. Stated more generally, a mth minimum location (where $m \in \{1, 2, ..., P\}$) appears in j location vectors, where j is an integer and $1 \leq j \leq N$. Comparators 704 output one channel index for each of the P minimum locations to indicate which of the N channels has each minimum location (multiple channels may have a minimum location, but comparators 704 select only one of them note its channel index). Processing block 702 outputs a channel indices vector $[C_1, C_2, ..., C_P]$ to minimum location selector 714.

To calculate the minimum function, comparators 704 operate in either the POS format or the COO format depending on the format of the input locations. Processing block 702 receives a control signal (LC control) from S/D adapter input control 308 and a clock signal from clock 304. To illustrate the logic function of comparators 704, assume N = 2 and P = 1. For the POS format:

Location-A < Location-B then position-A < position-B; and
Location-A == Location-B then position-A == position-B.

That is, if Location-A in a location vector A is less than Location-B in a location vector B, then the position-A is less than the position-B. If Location-A is the same as Location-B, then the position-A is the same as position-B. For the COO format, assume a rank-3 tensor in having a location format [H, W, C]. For the COO format:

Location-A < Location-B then {A.H < B.H or ((A.H == B.H) and (A.W < B.W)) or ((A.H == B.H) and (A.W == B.W) and (A.C < B.C))}; and
Location-A == Location-B then (A.H == B.H) and (A.W == B.W) and (A.C == B.C)).

In the logic above, Location A is a location in the location vector A and Location-B is a location in location vector B. The indices of the 3-tuple represented by Location A are A.H, A.W, and A.C. The indices of the 3-tuple represented by Location-B are B.H, B.W, and B.C. In the COO format, comparators 704 compare the different axis values (H, W, C) to decide the ordering. The same logic applies to different rank location tensors.

In an embodiment, processing block 702 can include tensor format converter 708. Rather than comparing all the dimensions as shown the logic above when the COO format is used, tensor format converter 708 can convert the COO format into the POS format using:

$$pos\_A = A.C + (A.W * tensor\_C) + (A.H * tensor\_W*tensor\_C);$$

and

$$pos\_B = B.C + (B.W * tensor\_C) + (B.H * tensor\_W*tensor\_C).$$

In the logic above, pos_A is the position corresponding to the COO location value [A.H, A.W, A.C] and pos_B is the position corresponding to the COO the location value [B.H, B.W, B.C]. The values tensor_C and tensor_W are the C and W dimensions, respectively, from the tensor shape.

Minimum location selector 714 receives the N location vectors (e.g., the input matrix). Minimum location selector 714 is operable to output P minimum locations per base clock cycle as a location vector on output 60. In embodiments, minimum location selector 714 includes multiplexers $715_1, 715_2, ..., 715_P$ (also referred to as multiplexers $715_1...715_P$ or multiplexers 715), one for each of the P minimum locations. In general, multiplexer $715_m$ has N inputs to receive the mth location ($L_m$ in $[L_1, L_2, ..., L_P]$) in each of the N location vectors, respectively. A control input of multiplexer $715_m$ receives the mth channel index in the channel indices vector ($C_m$ in $[C_1, C_2, ..., C_P]$). An output of multiplexer $715_m$ provides the mth location of an output location vector for LP 50.

Order generator 712 receives the N location vectors (i.e., the input matrix). Order generator 712 is also coupled to output 60 for receiving the output location vector. Order generator 712 generates N orders of P-bits (an array order[N] [P]) as a control signal. That is, order generator 712 includes N outputs O[1], O[2], ..., O[N], each being P-bits wide. The outputs O[1], O[2], ..., O[N] collectively comprise output 56 of LP 50. The meaning of a given bit, order[k][r], is as follows: If the location vector k has one location being the rth minimum found (among the P derived minimum locations, sorted in ascending order), then the rth bit is set to logic 1; else the rth bit is set to logic 0.

Request generator 710 generates requests for LGs $40_1...40_N$, designated RC[1]...RC[N]. The value on RC[k] is sum[k][:] = sum(order[k][1] + order[k][2] + ... + order[k][P]). That is, RC[k] encodes the number of minimum locations present in the kth location vector for the current base clock cycle, which corresponds to the number of new locations to be shifted into the kth location vector for the next base clock cycle.

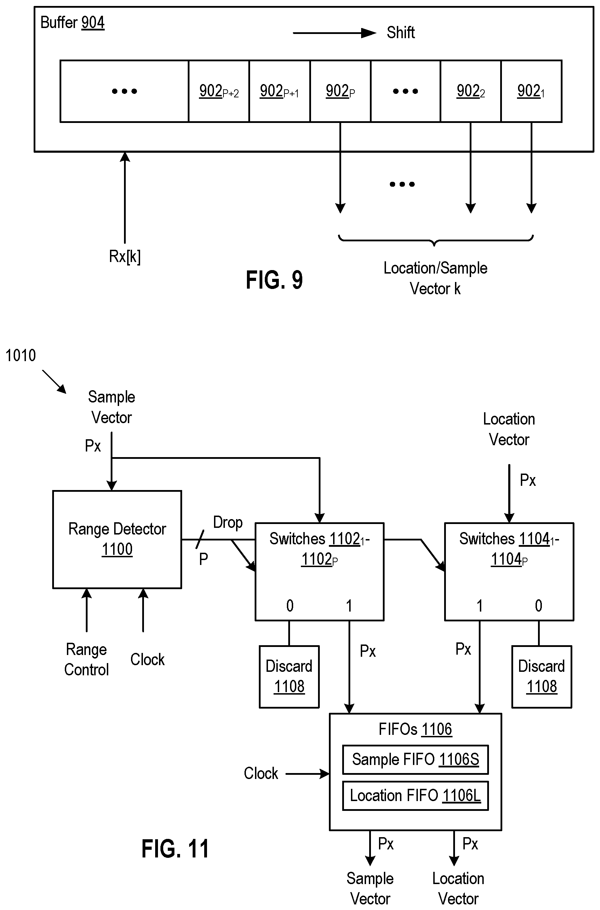

Fig. 9 is a block diagram depicting a buffer storing a sequence of locations according to embodiments. A buffer 904 comprises, for example, L-Buffer 504 in an LG $40_k$. Buffer 904 stores locations in registers $902_1, 902_2, ..., 902_1, 902_{P+1}, 902_{P+2}$, and so on. Locations from the set of registers $902_1...902_P$ comprise the location vector for the kth channel. A request Rx[k], which is RC[k] in the present example, encodes the number of locations that are to be shifted out of buffer 904 starting from register $902_1$. Thus, if RC[k] is one, then the location in $902_2$ is shifted into $902_1$; the location in $902_3$ is shifted into $902_2$; the location in $902_{P+1}$ is shifted into $902_P$; and so on. The amount of shift of buffer 904 in response to a request is between 0 and P locations. RC[k] can refresh the kth location vector for the current base clock cycle, depending on how many minimum locations were selected by LP 50 from the kth location vector in the previous base clock cycle.

Returning to Fig. 7, each channel 23 is processed by LP 50 at its own pace. The result is that some channels 23 will be exhausted of locations before others. If a kth channel is exhausted, then the P bits in order[k] are set to zero. Processing block 702 repeats the operation described above for each base clock cycle until all channels are exhausted. Processing block 702 includes a window counter 706 that keeps track of how many valid minimum locations were generated. Window counter 706 generates output 58, which encodes a packet size indicating valid locations in the output location vector. The packet size is nominally P as LP 50 determines P minimum locations per clock cycle. As channels become exhausted, LP 50 can find less than P minimum locations among the remaining locations (i.e., the last set of locations to be processed may be less than P). Window counter 706 sets the packet size accordingly.

Returning to Fig. 4, output 60 is coupled to an input of L-FIFO 52. L-FIFO 52 stores the output location vectors to be consumed by sparse/dense adapter output circuit 22B. Output 58 is coupled to an input of PS-FIFO 54. PS-FIFO 54 buffers the packet sizes generated by LP 50. Output 56 is coupled to an input of O-FIFO 48. O-FIFO 48 buffers the order signals O[1]...O[N] generated by LP 50.

SGs 42 are configured to read samples from input tensors stored in memory 20. Each channel $23_1...23_N$ includes a respective one of SGs $42_1...42_N$. In embodiments, for a base clock cycle, SG $40_k$ reads P samples into channel $23_k$. For a given base clock cycle, the P samples are referred to as a sample vector. Samples in a sample vector are in order of their respective locations. In the example embodiments herein, assume a sample vector $[S_1, S_2, ..., S_P]$ to be in ascendant order of corresponding locations. Outputs of SGs $42_1...42_N$ are coupled to respective inputs of expanders $44_1...44_N$.

Fig. 6 is a block diagram depicting a sample grabber according to embodiments. As shown in Fig. 6, an SG $42_k$ includes a sample address generation unit (S-AGU) 602 and a sample buffer (S-Buffer) 604. An output of S-AGU 602 is coupled to a switch 606. An input of S-Buffer 604 is coupled to a switch 608. Switches 606 and 608 receive control signals (SG switch control) from S/D adapter input control 308. Switches 606 and 608 are always in the same mode, which is one of sparse or void. In the sparse mode, switch 606 connects S-AGU 602 to an address interface of memory 20 and switch 608 connects S-Buffer 604 to a data interface of memory 20. In the void mode, switch 606 disconnects S-AGU 602 from memory 20. S-AGU 602 can dispense with address generation in the void mode. In void mode, switch 608 connects the input of S-Buffer 604 to receive a sample of constant value (set by S/D adapter input control 308). The constant value can be an identity value depending on the ALU operation (e.g., additive identity, multiplicative identity, etc.).

S-AGU 602 receives a control signal (S-AGU control) from S/D adapter input control 308 and a clock signal from clock 304. S-Buffer 604 receives a clock signal from clock 304. When S/D adapter input control 308 dictates the sparse mode, S-AGU 602 generates addresses in memory 20 for reading samples from the kth input tensor. S/D adapter input control 308 can specify initial addresse(s), tensor shape, tensor size, etc. S-Buffer 604 stores the samples read from memory 20. When S-AGU 602 and S/D adapter input control 308 dictate the void mode, S-Buffer 604 captures samples of the constant value. A use for void mode is described below.

S-Buffer 604 accommodates for latency between S-AGU 602, memory 20, and expanders 44. S-Buffer 604 is drained through control flow from expanders 44, each of which requests samples at its own pace (as described below). Thus, S-Buffer 604 receives a request signal RE[k] from expander $44_k$. S-Buffer 604 refreshes sample vector $[S_1, S_2, ..., S_P]$ with between 0 and P new samples per base clock cycle based on the request signal RE[k]. For example, assume RE[k] calls for m new samples ($m \in \{1, 2, ..., P\}$), then a refresh causes: each $S_x$ where $x \leq m$ to be discarded; each $S_y$, where $(m+1) \leq y \leq P$, to be shifted left by m; and each $S_z$, where $(P - m +1) \leq z \leq P$, store a new sample. S-Buffer 604 can supply a control signal to S-AGU 602 to prevent overflow.

In the context of scaling by P, in embodiments, S-AGU 602 can scale its address interface with memory 20 so that P samples are returned per base clock cycle (in case of a sparse mode. S-AGU 602 can dispense with address generation in the void mode.

Returning to Fig. 4, each channel $23_1...23_N$ includes a respective one of expanders $44_1...44_N$. Expanders $44_1...44_N$ receive P-element sample vectors from SGs $42_1...42_N$, respectively. Expanders $44_1...44_N$ also receive P-bit order signals from O-FIFO 48. Expanders $44_1...44_N$ generate P-element sample vectors as output.

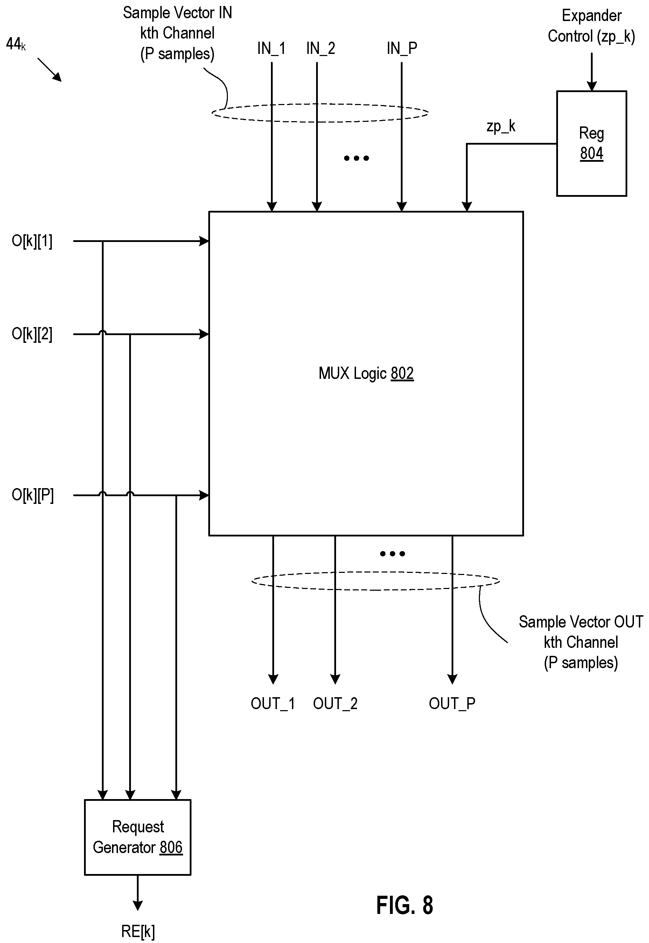

Fig. 8 is a block diagram depicting an expander circuit according to embodiments. As shown in Fig. 8, an expander $44_k$ comprises multiplexer logic 802, a register 804, and a request generator 806. Multiplexer logic 802 has inputs to receive P samples (IN_1, IN_2, ..., IN_P) and an input to receive a zero-point value for the kth channel (zp_k). Multiplexer logic 802 has outputs to provide P samples (OUT_1, OUT_2, ..., OUT_P). Multiplexer logic 802 has control inputs to receive P-bits from the order signal O[k]. Expander $44_k$ receives a P-element sample vector on the kth channel as input, which is coupled to the input of the multiplexer logic 802. The input zp_k of multiplexer logic 802 is provided by an output of register 804. Register 804 stores a zero-point value (zp_k) for the kth input tensor. Register 804 can receive the value zp_k from S/D adapter input control 308. Expander $44_k$ generates a P-element sample vector for the kth channel as output, which is supplied by the output of the multiplexer logic 802.

Each output of multiplexer logic 802 passes either a sample from the input sample vector or the zero-point value (zp_k). depending on the control signal O[k]. If O[k][m] (m $\in$ {1, 2, ..., P}) is set to 0, this indicates that the input tensor on channel $23_k$ does not have a sample for the mth minimum location in the location vector on output 60. In such case, multiplexer logic 802 passes zp_k to OUT_m. If O[k][m] (m $\in$ {1, 2, ..., P}) is set to 1, this indicates that the input tensor on channel $23_k$ has a sample for the mth minimum location in the location vector on output 60. In such case, multiplexer logic 802 passes an input sample (selected from IN_1, IN_2, ..., IN_P, in order) to OUT_m.

Operation of multiplexer logic 802 can be understood from the following example. In an example, assume P = 2 and N = 2. Since N = 2, there are two channels each processing one of two input tensors. Assume tensors for the two channels are:

location[1] = {2, 7, 11, 15, 20}; sample[1] = {x1, x2, x3, x4, x5}
location[2] = {3, 11, 15, 17}; sample[2] = {y1, y2, y3, y4}

In a first base clock cycle, location processor 50 selects two minimum locations from the location vectors (since P = 2). The minimum locations are {2} and {3}. Location processor 50 generates order signal O[1] to be [1, 0] since location[1] includes the first minimum location but not the second minimum location. Location processor 50 generates order signal O[2] to be [0, 1] since location[2] includes the second minimum location but not the first minimum location. For channel $23_1$, multiplexer logic 802 passes IN_1 to OUT_1 since O[1][1] is set to one, and passes zp_1 to OUT_2 since O[1][2] is set to zero. That is, expander $44_1$ outputs {x1, zp_1}. For channel $23_2$, multiplexer logic 802 passes zp_2 to OUT_1 since O[2][1] is set to zero, and passes IN_1 to OUT_2 since O[2][2] is set to one. That is, expander $44_2$ outputs {zp_2, y1}. This results in the operations x1 op zp_2 and zp1 op y1 (where op is an arbitrary operator). After the first base clock cycle, the tensors for the two channels are:

location[1] = {7, 11, 15, 20}; sample[1] = { x2, x3, x4, x5}
location[2] = {11, 15, 17}; sample[2] = {y2, y3, y4}

In a second base clock cycle, location processor 50 selects two minimum locations from the location vectors (since P = 2). The minimum locations are {7} and {11}. Location processor 50 generates order signal O[1] to be [1, 1] since location[1] includes both minimum locations. Location processor 50 generates order signal O[2] to be [0, 1] since location[2] includes the second minimum location but not the first minimum location. For channel $23_1$, multiplexer logic 802 passes IN_1 to OUT_1 since O[1][1] is set to one, and passes IN_2 to OUT_2 since O[1][2] is set to one. That is, expander $44_1$ outputs {x2, x3}. For channel $23_2$, multiplexer logic 802 passes zp_2 to OUT_1 since O[2][1] is set to zero, and passes IN_1 to OUT_2 since O[2][2] is set to one. That is, expander $44_2$ outputs {zp_2, y2}. This results in the operations x2 op zp_2 and x3 op y2 (where op is an arbitrary operator). After the second base clock cycle, the tensors for the two channels are:

location[1] = {15, 20}; sample[1] = {x4, x5}
location[2] = {15, 17}; sample[2] = {y3, y4}

In a third base clock cycle, location processor 50 selects two minimum locations from the location vectors (since P = 2). The minimum locations are {15} and {17}. Location processor 50 generates order signal O[1] to be [1, 0] since location[1] includes {15} but not {17}. Location processor 50 generates order signal O[2] to be [1, 1] since location[2] includes both minimum locations. For channel $23_1$, multiplexer logic 802 passes IN_1 to OUT_1 since O[1][1] is set to one, and passes zp_1 to OUT_2 since O[1][2] is set to zero. That is, expander $44_1$ outputs {x4, zp_1}. For channel $23_2$, multiplexer logic 802 passes IN_1 to OUT_1 since O[2][1] is set to one, and passes IN_2 to OUT_2 since O[2][2] is set to one. That is, expander $44_2$ outputs {y3, y4}. This results in the operations x4 op y3 and zp_1 op y4 (where op is an arbitrary operator). After the third base clock cycle, the tensors for the two channels are:

location[1] = {20}; sample[1] = {x5}
location[2] = {}; sample[2] = {}

In a fourth base clock cycle, location processor 50 attempts to select two minimum locations from the location vectors (since P = 2), but finds only one minimum location {20}. Location processor 50 generates order signal O[1] to be [1, X] since location[1] includes {20} (where X is don't care). Location processor 50 generates order signal O[2] to be [0, X] since location[2] does not include {20}. For channel $23_1$, multiplexer logic 802 passes IN_1 to OUT_1 since O[1][1] is set to one. That is, expander $44_1$ outputs {x5, X}. For channel $23_2$, multiplexer logic 802 passes zp_2 to OUT_1 since O[2][1] is set to one. That is, expander $44_2$ outputs {zp_2, X}. This results in the operation x5 op zp_2 (where op is an arbitrary operator). The packet size for this fourth base clock cycle would be one (instead of two) and thus ALU $24_2$ can be disabled.

**11**

Request generator 806 generates requests for SGs $42_1...42_N$, designated RE[1]...RE[N]. The value on RE[k] is sum[k][:] = sum(order[k][1] + order[k][2] + ... + order[k][P]). RE[k] encodes the number of samples in the kth sample vector passed by expander $44_k$. The value RE[k] corresponds to the number of new samples to be needed in kth sample vector for the next base clock cycle.

Referring again to Fig. 9, buffer 904 comprises, for example, S-Buffer 604 in an SG $42_k$. Buffer 904 stores samples in registers $902_1$, $902_2$, ..., $902_1$, $902_{P+1}$, $902_{P+2}$, and so on. Samples from the set of registers $902_1...902_P$ comprise the sample vector for the kth input tensor. A request Rx[k], which is RE[k] in the present example, encodes the number of samples that are to be shifted out of buffer 904 starting from register $902_1$. Thus, if RE[k] is one, then the sample in $902_2$ is shifted into $902_1$; the sample in $902_3$ is shifted into $902_2$; the sample in $902_{P+1}$ is shifted into $902_P$; and so on. The amount of shift of buffer 904 in response to a request is between 0 and P samples. RE[k] can refresh the kth sample vector for the current base clock cycle, depending on how many samples were passed by expander $44_k$ from the kth sample vector in the previous base clock cycle.

Returning to Fig. 4, each channel $23_1...23_N$ includes a respective one of S-FIFOs $46_1...46_N$. S-FIFOs $46_1...46_N$ receive N sample vectors from expanders $44_1...44_N$, respectively. ALUs $24_1...24_P$ consume samples from S-FIFOs 46 per base clock cycle. In particular, ALU $24_1$ consumes samples at the first index of the sample vectors presented by S-FIFOs 46; ALU $24_2$ consumes samples at the second index of the sample vectors presented by S-FIFOs 46; and so on until ALU $24_P$ consumes samples at the Pth index of the sample vectors presented by S-FIFOs 46. More generally, an ALU $24_m$ consumes N samples selected from the mth index of the N sample vectors presented by S-FIFOs $46_1...46_N$, respectively. The calculations performed by ALUs 24 are controlled by ALU control 311. ALU control 311 receives a packet size from PS-FIFO 54 for each base clock cycle. If packet size indicates less than P valid samples exist for the current base clock cycle (e.g., the last base clock cycle for processing the input tensors), then ALU control 311 can disable the corresponding ALUs 24 that would not receive valid data. The outputs of ALUs 24 provide sample vectors to sparse/dense adapter output circuit 22B. Each sample vector output from ALUs 24 includes P output samples. Outputs of ALUs 24 can be coupled to an input of SO-FIFO 53. SO-FIFO 53 stores one or more P-element output samples. Output 63 of SO-FIFO 53 is coupled to an input of spares/dense adapter output circuit 22B.

The arrangement shown in Fig. 4 allows ALU array 306 to process a mix of both sparse and dense tensors (or only sparse tensors or only dense tensors). If any input tensor is a dense tensor, then each location vector read from that dense tensor will have all of the P minimum locations resulting in all P bits in its order signal O being set to 1. This will force the full expansion of each sparse tensor. If the input tensors are all sparse tensors, the expansion is only applied when at least one of the sparse tensors has sample(s) at the P minimum location(s). An interesting application is when one or more of the input tensors is sparse, but it is desired to fully decompress the sparse tensors before feeding ALU array 306. This can depend on the operation being performed, such as a cumulative sum of samples, for which it is desirable to process dense tensors. This can be realized with this circuitry by using an arbitrary unused resource, such as LG $40_N$, and configure it into dense mode (to force tensor decompression) and configure SG $42_N$ in void mode (since no data exists for channel N).

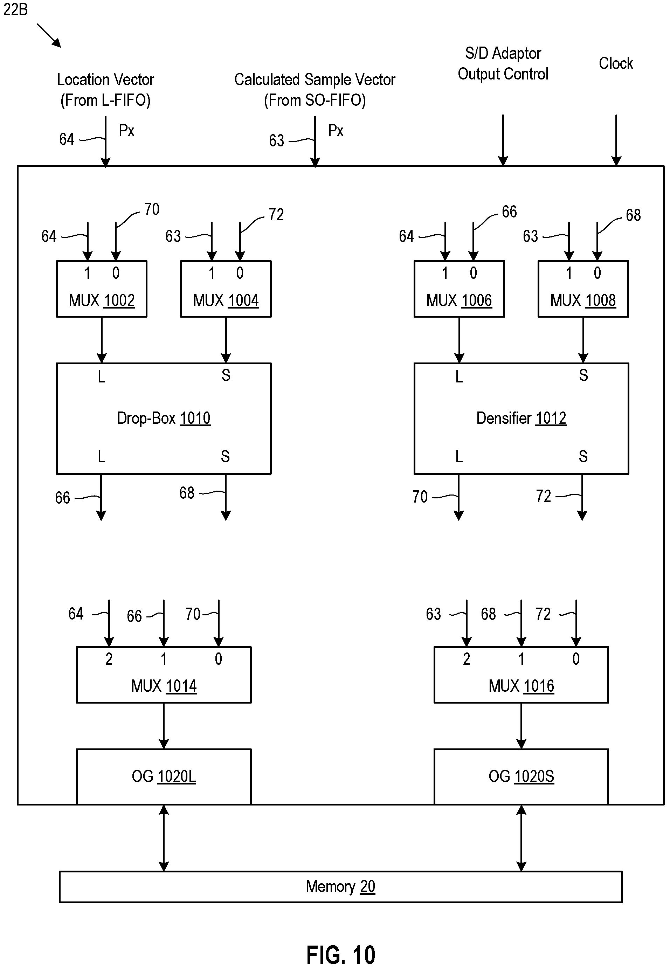

Fig. 10 is a block diagram depicting sparse/dense adapter output circuit 22B according to embodiments. Sparse/dense adapter output circuit 22B includes multiplexers 1002, 1004, 1006, and 1008. Sparse/dense adapter output circuit 22B further includes drop-box 1010 (also referred to as a drop-box circuit 1010), densifier 1012 (also referred to as a densifier circuit 1012), multiplexer 1014, multiplexer 1016, output generator (OG) 1020L, and OG 1020S. Sparse/dense adapter output circuit 22B receives a location vector from L-FIFO 52, which includes P locations. Sparse/dense adapter output circuit 22B receives an output sample vector from SO-FIFO 53, which includes P samples. Sparse/dense adapter output circuit 22B also receives control input from S/D adapter output control 310 and a clock signal from clock 304.

Each of multiplexers 1002, 1004, 1006, and 1008 includes two inputs designated "0" and "1." Control inputs of multiplexers 1002, 1004, 1006, and 1008 are omitted for clarity, but can be provided by S/D adapter output control 310. The input (1) of multiplexer 1002 and the (1) input of multiplexer 1006 each receives input 64, which is the location vector from L-FIFO 52. The input (1) of multiplexer 1004 and the input (1) of multiplexer 1008 each receives input 63 from SO-FIFO 53, which is the output sample vector. Drop-box 1010 includes inputs (L) and (S) and outputs (L) 66 and (S) 68 (where L is for location and S is for sample). Densifier 1012 includes inputs (L) and (S) and outputs (L) 70 and (S) 72. The input (0) of multiplexer 1002 is coupled to output 70. The input (0) of multiplexer 1004 is coupled to output 72. The input (0) of multiplexer 1006 is coupled to output 66. The input (0) of multiplexer 1008 is coupled to output 68. An output of multiplexer 1002 is coupled to the input (L) of drop-box 1010. The output of multiplexer 1004 is coupled to the input (S) of drop-box 1010. The output of multiplexer 1006 is coupled to the input (L) of densifier 1012. The output of multiplexer 1008 is coupled to the input (S) of densifier 1012.

Each of multiplexers 1014 and 1016 include three inputs designated "0", "1", and "2." Control inputs of multiplexers 1014 and 1016 are omitted for clarity but can be provided by S/D adapter output control 310. The input (0) of multiplexer 1014 is coupled to output 70; the input (1) of multiplexer 1014 is coupled to output 66; and the input (2) of multiplexer 1014 is coupled to output 64. The input (0) of multiplexer 1016 is coupled to output 63; the input (1) of multiplexer 1016 is coupled to output 68; and the input (2) of multiplexer 1016 is coupled to output 63. An output of multiplexer 1014 is coupled to an input of OG 1020L. An output of multiplexer 1016 is coupled to an input of OG 1020S. OG 1020L is coupled to address/data interfaces of memory 20. OG 1020S is coupled to address/data interfaces of memory 20.

In operation, drop-box 1010 is operable to compress the output tensor by dropping samples within a certain range (e.g., sometimes referred to as thresholding). Densifier 1012 is operable to densify the output tensor by changing it from sparse to dense. As the output tensor includes output 64 having a location vector and output 63 having a sample vector, each of drop-box 1010 and densifier 1012 include an input/output (L) for locations and an input/output (S) for samples. In a first mode, S/D adapter output controller 310 can control multiplexers 1014 and 1016 to each select the input (2), which directly supplies the location vector on output 64 and the sample vector on output 63 to OG 1020L and OG 1020S, respectively. In this first mode, drop-box 1010 and densifier 1012 are bypassed.

In a second mode, S/D adapter output controller 310 can control multiplexers 1014 and 1016 top each select input (1), which supplies output 66 of drop-box 1010 (location vector) to OG 1020L and output 68 of drop-box 1010 (sample vector) to OG 1020S. The second mode has two sub-modes. In a first sub-mode, S/D adapter output controller 310 controls multiplexer 1002 and multiplexer 1004 to each select the input (1), which supplies the (L) and (S) inputs of drop-box 1010 with the location vector on output 64 and the sample vector on output 63, respectively. In this first sub-mode, only compression of the output tensor is selected. In a second sub-mode, S/D adapter output controller 310 controls multiplexer 1002 and multiplexer 1004 to each select input (0), which supplies the (L) and (S) inputs of drop-box 1010 with the location vector on output 70 and the sample vector on output 72 of densifier 1012. In the second-sub mode, S/D adapter output controller 310 controls multiplexers 1006 and 1008 to each select the input (1) so that densifier 1012 receives the location vector on output 64 at its input (L) and the sample vector on output 63 at its input (S). The second sub-mode allows for chaining of densifier 1012 and then drop-box 1010. That is, the output tensor is first densified and then compressed using thresholding.

In a third mode, S/D adapter output controller 310 can control multiplexers 1014 and 1016 to each select the input (0), which supplies output 70 of densifier 1012 (location vector) to OG 1020L and output 82 of densifier (sample vector) to OG 1020S. The third mode includes two sub-modes. In a first sub-mode, S/D adapter output controller 310 controls multiplexer 1006 and multiplexer 1008 to each select the input (1), which supplies the (L) and (S) inputs of densifier 1012 with the location vector on output 64 and the sample vector on output 63, respectively. In this first sub-mode, the output tensor is only densified. In a second sub-mode, S/D adapter output controller 310 controls multiplexer 1006 and multiplexer 1008 to each select input (0), which supplies the (L) and (S) inputs of densifier 1012 with the location vector on output 66 and the sample vector on output 68 of drop-box 1010. In the second-sub mode, S/D adapter output controller 310 controls multiplexers 1002 and 1004 to each select the input (1) so that drop-box 1010 receives the location vector on output 64 at its input (L) and the sample vector on output 63 at its input (S). The second sub-mode allows for chaining of drop-box 1010 and then densifier 1012. That is, the output tensor is first compressed using thresholding and then densified.

OG 1020S writes sample vectors of the output tensor to memory 20. OG 1020L, if the output tensor is sparse, write location vectors of the output tensor to memory 20. If the location vector is dense, OG 1020L performs no memory write operations.

Fig. 11 is a block diagram depicting drop-box 1010 according to embodiments. Drop-box 1010 includes a range detector 1100, switches $1102_1$, $1102_2$, ..., $1102_P$ (collectively switches $1102_1...1102_P$ or switches 1102), switches $1104_1$, $1104_2$, ..., $1104_P$ (collectively switches $1104_1... 1104_P$ or switches 1104), and FIFOs 1106. FIFOs 1106 include a sample FIFO 1106S and a location FIFO 1106L. Range detector 1100 receives a sample vector having P samples from a sample source (i.e., either densifier 1012 or S/D adapter input circuit 22A). Range detector 1100 supplies a control signal ("drop") having P-bits to each bank of switches 1102 and switches 1104. Switches 1102 receive the sample vector having P samples from the sample source. Switches 1104 receive a location vector having P locations from a location source (e.g., either densifier 1012 or S/D adapter input circuit 22A). Switches 1102 include outputs (0) and outputs (1). Switches 1104 include outputs (1) and outputs (0). Outputs (0) of switches 1102 and switches 1104 are coupled to a discard circuit 1108. Outputs (1) of switches 1102 are coupled to an input of sample FIFO 1106S. Outputs (1) of switches 1104 are coupled to an inputs of location FIFO 1106L. Discard circuit 1108 is any circuit or connection that sinks the location/sample so that the location/sample can be discarded from the output tensor. Range detector 1100 and FIFOs 1106 receive a clock signal from clock 304.

In operation, range detector 1100 generates the drop signal, where each bit drop[1]...drop[P] indicates whether a corresponding sample in the P-element sample vector lies inside a predefined region. The predefined range can be set using range control data from S/D adapter output control 310. If an mth sample in the sample vector lies in the predefined region, then drop[m] is set to logic 1. If a mth sample in the sample vector lies outside the predefined region, then drop[m] is set to logic 0. Range detector 1100 can implement the following logic: if ((sample_m > T2) or (sample_m < T1)) then drop[m] = 0; else drop[m] = 1, where sample_m is the mth sample in the sample vector and T1 and T2 are threshold sample values. Such logic implements an asymmetric range check. Alternatively, range detector 1100 can implement a symmetric range check as follows: if (|sample_m| > T3) then drop[m] = 0; else drop[m] = 1, where sample_m is the mth sample in the sample vector, T3 is a threshold sample, |sample_m| denotes an absolute value of sample_m. S/D adapter output control 310 can set the type of range check to be performed. S/D adapter output control 310 can set the threshold sample values (T1, T2, T3) as constants for processing a given set of input tensors. These constants can be obtained, for example, through network training and collection of sample histograms/statistics. In a more advanced scheme, ML processor 18 can include logic to discover the threshold sample values dynamically by filtering and binning the input samples as they are received.

If drop[m] is logic 0, then switch $1102_m$ drops the mth sample using discard circuit 1108 and switch $1104_m$ drops the mth location using discard circuit 1108. If drop[m] is logic 1, then $switch_m$ 1102 passes the mth sample to sample FIFO 1106S and $switch_m$ 1104 passes the mth location to location FIFO 1106L. Thus, switches 1102 supply between 0 and P samples/locations to FIFOs 1106 each base clock cycle. Sample FIFO 1106S outputs a sample vector and location FIFO 1106L outputs a location vector.

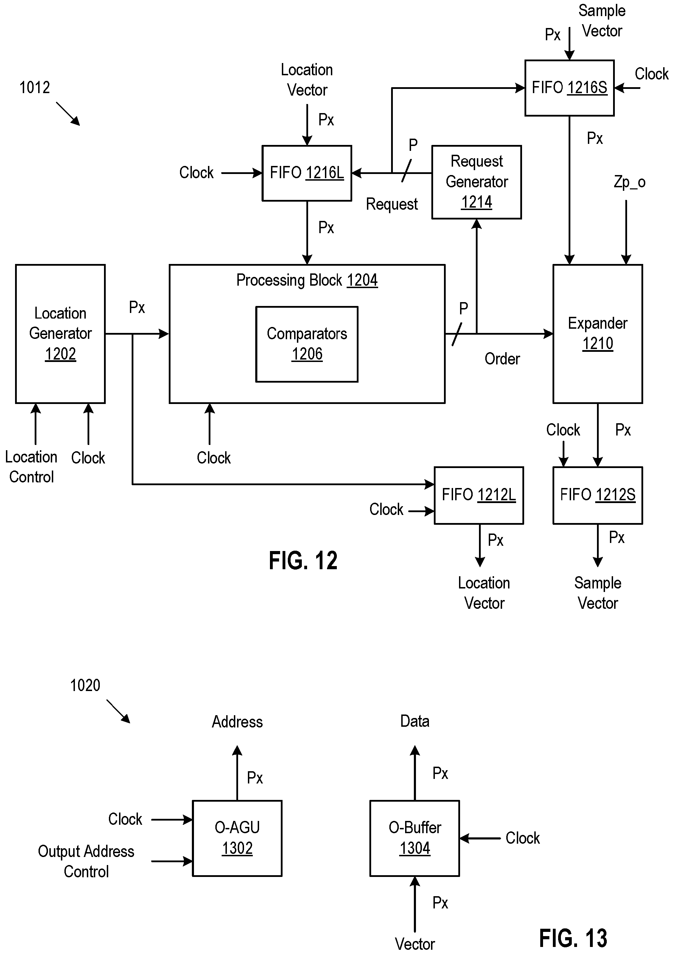

Fig. 12 is a block diagram depicting a densifier 1012 according to embodiments. Densifier 1012 comprises a location generator 1202, a processing block 1204, an expander 1210, a request generator 1214, and FIFOs 1212L, 1212S, 1216L, and 1216S. Location generator 1202 receives a clock signal from clock 304 and location control data from S/D adapter output control 310. Location generator 1202 has an output coupled to an input of processing block 1204. Location generator 1202, based on location control, generates a sequence of locations for the full tensor shape of the output tensor. Locations output by location generator 1202 can be in COO or POS format. Location generator 1202 can provide P locations each base clock cycle to processing block 1204. The output of location generator 1202 is also coupled to an input of FIFO 1212L.

An input of FIFO 1216L receives a location vector (having P locations) from a location source (e.g., either drop-box 1010 or S/D adapter input circuit 22A). An input of FIFO 1216S receives a sample vector (having P samples) from a sample source (e.g., either drop-box 1010 or S/D adapter input circuit 22A). Each FIFO 1216 receives a clock signal from clock 304. An output of FIFO 1216L provides a location vector (P locations) to an input of processing block 1204. An output of FIFO 1216S provides a sample vector (S samples) to an input of expander 1210. Control inputs of FIFOs 1216L and 1216S receive a P-bit request signal from request generator 1214. The request signal determines the number of locations/samples shifted out of FIFOs 1216L and 1216S. Operation of FIFOs 1216L and 1216S can be understood with respect to Fig. 9 and is similar to L-Buffer 504 and L-Buffer 604 described above.

Processing block 1204 includes comparators 1206. Comparators 1206 function similar to comparators 704 (Fig. 7) described above. However, comparators 1206 only compare two location vectors: output of location generator 1202 and output of FIFO 1216L. Thus, the input matrix to comparators 1206 is 2xP rather than NxP as described above for comparators 704. Consider the locations in the location vector from location generator 1202 to be {dense locations}. Comparators 1206 determine which locations (if any) in the location vector from FIFO 1216L match the locations in {dense locations}. The location vector from FIFO 1216L can have between 0 and P locations matching those in {dense locations}. Comparators 1206 determine the indices in the location vector from FIFO 1216L that have the matching location values (if any) and processing block 1204 generates an order signal having P bits. A mth bit of the order signal is set (1) if the mth index of the location vector output by FIFO 1216L includes a location in {dense locations}. The mth bit of the order signal is unset (0) if the mth index of the location vector output by FIFO 1216L includes a location not in {dense locations}. The order signal is coupled to an input of request generator 1214 and an input of expander 1210. Request generator 1214 performs sum request[:] = request[1] + request [2] + ... + request [P] to generate the request value for shifting FIFOs 1216L and 1216S.

Expander 1210 functions similar to expander $44_k$ shown in Fig. 8 and described above. However, expander 1210 omits request generator 806 (such function being performed by request generator 1214). Otherwise, operation of expander 1210 is as described above for expander $44_k$. Expander supplies a P-element sample vector to the input of FIFO 1212S. FIFO 1212L provides a P-element location vector as output. FIFO 1212S provides a P-element sample vector as output.

In the embodiment of Fig. 12, densifier 1012 includes input FIFOs 1216L and 1216S. In other embodiments, these FIFOs 1216L and 1216S are omitted and the request signal is handled by FIFOs earlier in the pipeline, including FIFOs 1106 in drop-box 1010, L-FIFO 52, and SO-FIFO 53.

Fig. 13 is a block diagram depicting an output generator 1020 according to embodiments. Output generator 1020 includes an output address generator (O-AGU) 1302 and an output buffer (O-Buffer) 1304. O-AGU 1302 receives a clock signal from clock 304 and address control from S/D adaptor output control 310. O-Buffer 1304 receives a vector (P elements) as input (location vector or sample vector). O-Buffer 1304 receives the clock signal from clock 304. O-AGU 1302 generates addresses in memory 20 for storing the location/sample vector from O-Buffer 1304.

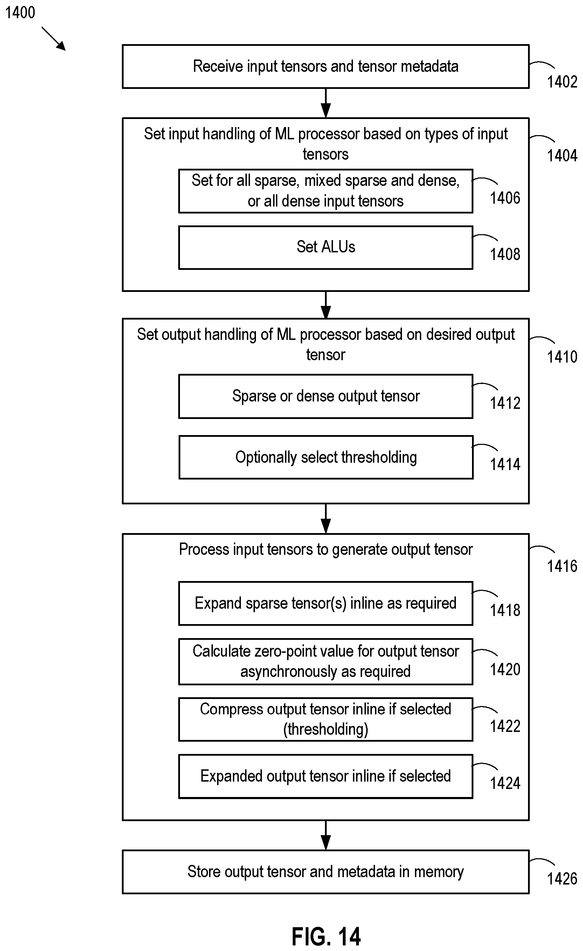

Fig. 14 is a flow diagram depicting a method 1400 of processing input tensors at an ML processor according to embodiments. Method 1400 begins at step 1402, where ML processor 18 receives input tensors and tensor metadata. As described above, ML processor 18 can read input tensors from memory 20. ML processor 18 can read tensor metadata from memory 20 or obtain tensor metadata in some other way. At step 1404, a controller sets the input handling of ML processor 18 based on the types of the input tensors. In embodiments, ML controller 302 includes S/D adapter input control 308 for configuring sparse/dense adapter circuit 22A to handle the input tensors. For example, as step 1406, S/D adapter input control 308 can set sparse/dense adapter circuit 22A to handle as input all sparse tensors, mixed sparse and dense tensors, or all dense tensors. At step 1408, ALU control 311 sets the calculations to be performed by ALUs 24.

At step 1410, a controller sets the output handling of ML processor 18 based on desired type of output tensor. In embodiments, ML controller 302 includes S/D adapter output control 310 for configuring sparse/dense adapter output circuit 22B. For example, at step 1412, S/D adapter output control 310 can control sparse/dense adapter output circuit 22B to output a sparse output tensor or a dense output tensor. At step 1414, S/D adapter output control 310 can control sparse/dense adapter output circuit 22B to perform thresholding on the output tensor.

At step 1416, ML processor 18 processes the input tensors to generate the output tensor. Several steps occur during step 1416. At step 1418, sparse input tensor(s), if any, are expanded inline as required (using complete or partial expansion). At step 1420, scalar processing 312 can calculate a zero-point value for the output tensor asynchronously as required (e.g., all input tensors are sparse). Note that step 1420 is performed external to the pipeline that processes the input tensors, as described above. At step 1422, the output tensor is compressed in-line if compression is selected (e.g., by implementing thresholding). At step 1424, the output tensor is expanded inline if expansion is selected (e.g., by densifier 1012). At step 1426, ML processor 18 stores the output tensor in memory 20.

Method 1400 implies several different operating modes of ML processor 18. First, consider all dense input tensors and a dense output tensor. The output locations from sparse/dense adapter input circuit 22A, and the output samples from ALU array 306, will be dense. Sparse/dense adapter output circuit 22B can store this dense output tensor directly in memory 20. Alternatively, sparse/dense adapter output circuit 22B can be controlled to apply thresholding (through drop-box 1010) and subsequently densification (through densifier 1012). The result is a dense output tensor with thresholding applied.

Next consider all sparse input tensors and a sparse output tensor. The output locations from sparse/dense adapter circuit 22A, and the output samples from ALU array 306, will be sparse. Each channel 23 can perform expansion of its sparse input tensor (e.g., partial expansion). Sparse/dense adapter output circuit 22B can store this sparse output tensor directly in memory 20. Alternatively, sparse/dense adapter circuit 22B can be controlled to apply densification (through densifier 1012) and subsequently thresholding (through drop-box 1010). The result is a sparse output tensor with thresholding applied.

Next consider all dense input tensors and a sparse output tensor. The output locations from sparse/dense adapter input circuit 22A, and the output samples from ALU array 306, will be dense. Sparse/dense adapter circuit 22B can be controlled to apply thresholding (through drop-box 1010), resulting in a sparse output tensor.

Next consider all sparse input tensors and a dense output tensor. The output locations from sparse/dense adapter circuit 22A, and the output samples from ALU array 306, will be sparse. Each channel 23 can perform expansion of its sparse input tensor (e.g., partial expansion). Sparse/dense adapter circuit 22B can be controlled to apply densification (through densifier 1012), resulting in a dense output tensor.

Next consider mixed sparse and dense tensors and a dense output tensor. The output locations from sparse/dense adapter input circuit 22A, and the output samples from ALU array 306, will be dense. Each channel 23 processing a sparse input tensor performs complete expansion. Sparse/dense adapter output circuit 22B can store this dense output tensor directly in memory 20. Alternatively, sparse/dense adapter output circuit 22B can be controlled to apply thresholding (through drop-box 1010) and subsequently densification (through densifier 1012). The result is a dense output tensor with thresholding applied.

Finally, consider mixed sparse and dense tensors and a sparse output tensor. The output locations from sparse/dense adapter input circuit 22A, and the output samples from ALU array 306, will be dense. Each channel 23 processing a sparse input tensor performs complete expansion. Sparse/dense adapter output circuit 22B can be controlled to apply thresholding (through drop-box 1010), resulting in a sparse output tensor.

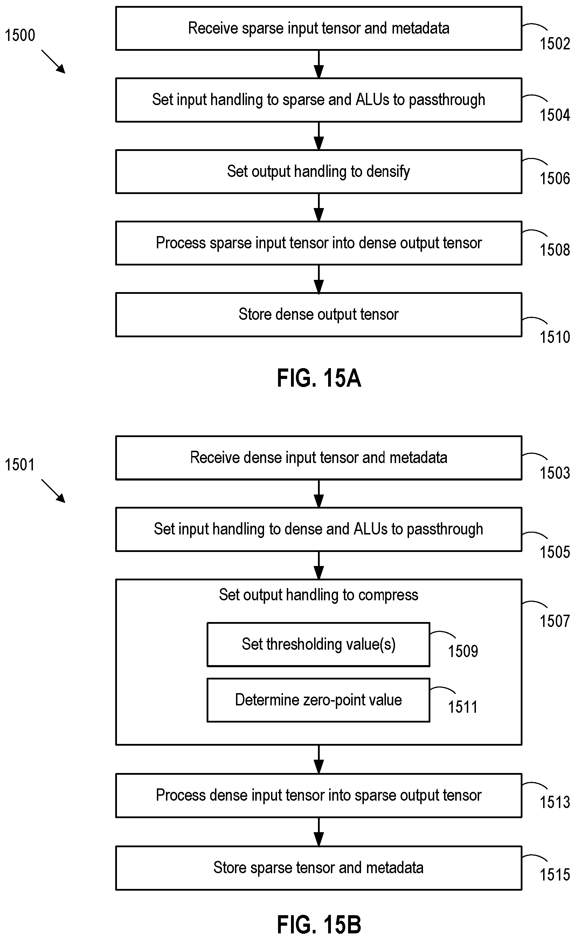

Fig. 15A is a flow diagram depicting a method 1500 of converting a sparse tensor into a dense tensor according to embodiments. Method 1500 begins at step 1502, where ML processor 18 receives a sparse input tensor and its tensor metadata. At step 1504, S/D adapter input control 308 sets input handling of sparse/dense adapter input circuit 22A to handle a sparse tensor. ALU control 311 sets ALUs 24 to passthrough. At step 1506, S/D adapter output control 310 sets output handling of sparse/dense adapter output circuit 22B to use densification (through densifier 1012). At step 1508, ML processor 18 processes the sparse input tensor into a dense output tensor. At step 1510, ML processor 18 stores the dense output tensor in memory 20.

Fig. 15B is a flow diagram depicting a method 1501 of converting a dense tensor into a sparse tensor according to embodiments. Method 1501 begins at step 1503, where ML processor 18 receives a dense input tensor and its tensor metadata. At step 1505, S/D adapter input control 308 sets input handling of sparse/dense adapter input circuit 22A to handle a dense tensor. ALU control 311 sets ALUs 24 to passthrough. At step 1507, S/D adapter output control 310 sets output handling of sparse/dense adapter output circuit 22B to apply compression. For example, at step 1509, S/D adapter output control 310 sets thresholding value(s) for drop-box 1010 and controls sparse/dense adapter output circuit 22B to apply drop-box 1010. At step 1511, ML controller 302 can determine a zero-point value for the output tensor. At step 1513, ML processor 18 processes the dense input tensor into a sparse output tensor. A step 1515, ML processor 18 stores the sparse output tensor in memory 20.

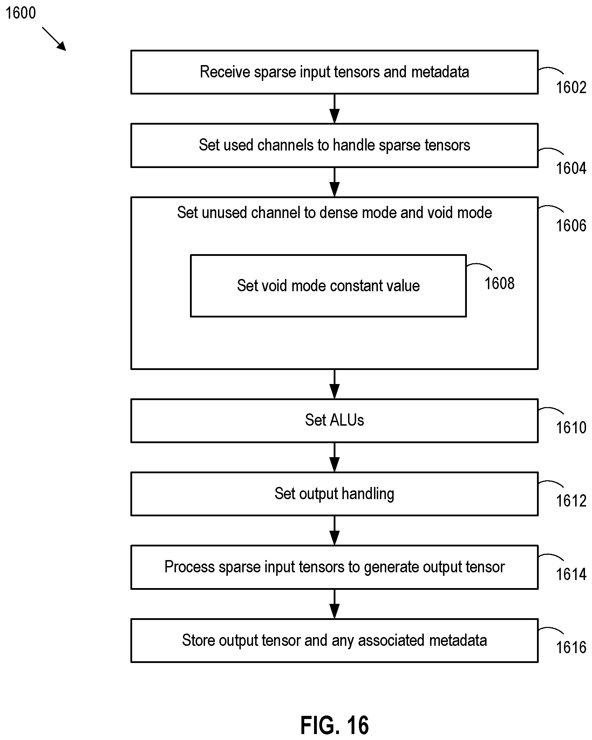

Fig. 16 is a flow diagram depicting a method 1600 of fully expanding sparse input tensors for certain types of calculations that require dense tensors according to embodiments. Method 1600 begins at step 1602, where ML processor 18 receives all sparse input tensors and associated tensor metadata. At step 1604, S/D adapter input control 308 sets input handling of the used channels in sparse/dense adapter input circuit 22A to handle sparse tensors. At step 1606, S/D adapter input control 308 sets an unused channel in sparse/dense adapter input circuit 22A to dense mode (in LG) and void mode (in SG). The unused channel outputs constant value samples to ALU array 306. Constant value samples are samples each having a common value. At step 1608, S/D adapter input control 308 sets the void mode constant value. As a result, the sparse input tensors will be completely expanded, since LP 50 will generate dense output locations. The SG in the unused channel will apply the void mode constant value (e.g., an identity value depending on the ALU calculation). At step 1610, ALU control 311 sets the ALUs 24 for the calculations to be performed. Such calculations can be of the type where dense tensors are required. At step 1612, S/D adapter output control 310 sets output handling of sparse/dense adapter output circuit 22B as desired (any of the modes described above). At step 1614, ML processor 18 processes the sparse input tensors to generate an output tensor. At step 1616, ML processor 18 stores the output tensor (and any associated metadata).

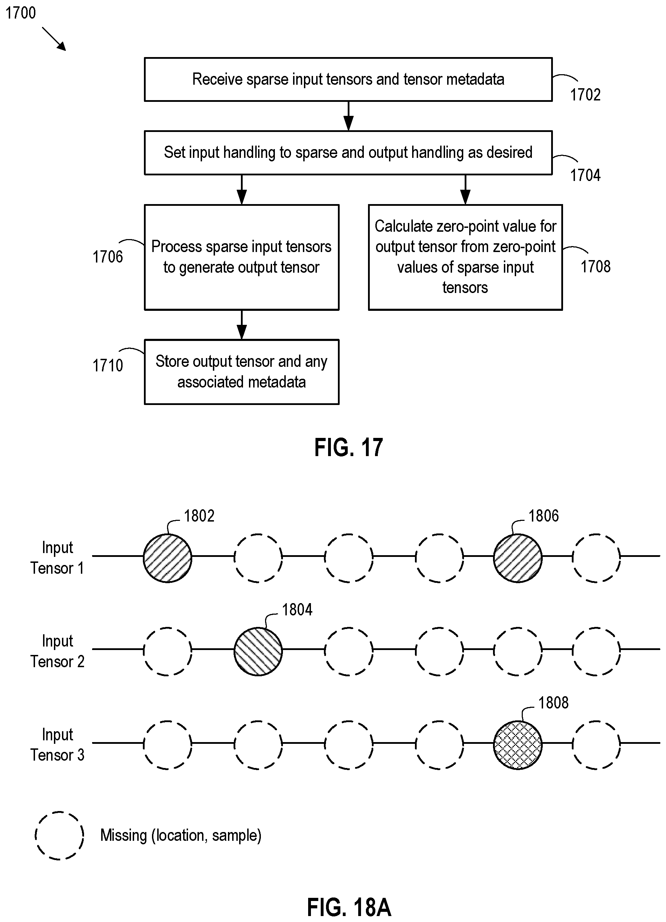

Fig. 17 is a flow diagram depicting a method 1700 of processing sparse tensors at an ML processor according to embodiments. Method 1700 begins at step 1702, where ML processor 18 receives all sparse input tensors and associated tensor metadata. At step 1704, S/D adapter input control 308 sets input handling of sparse/dense adapter input circuit 22A to handle the sparse tensors. S/D adapter output control 310 sets output handling of sparse/dense adapter output circuit 22B as desired (any of the modes described above). At step 1706, ML processor 18 processes the sparse input tensors to generate an output tensor. At step 1710, ML processor 18 stores the output tensor and any associated metadata. In parallel to step 1706, ML processor 18 can calculate a zero-point value for the output tensor from zero-point values of the sparse input tensors. As described above, the output zero-point value can be determined asynchronously with the processing of the sparse input tensors.

Fig. 18A is a block diagram illustrating three example sparse input tensors. An input tensor 1 includes $\{samples\}_v$ having a sample 1802 at a first location and a sample 1806 at a fifth location. Dashed circles in the diagram indicate locations in $\{locations\}_{diff}$ and such locations have no sample value in $\{samples\}_v$. An input tensor 2 includes $\{samples\}_v$ having a sample 1804 at a second location. An input tensor 3 includes $\{samples\}_v$ having a sample 1808 at the fifth location.

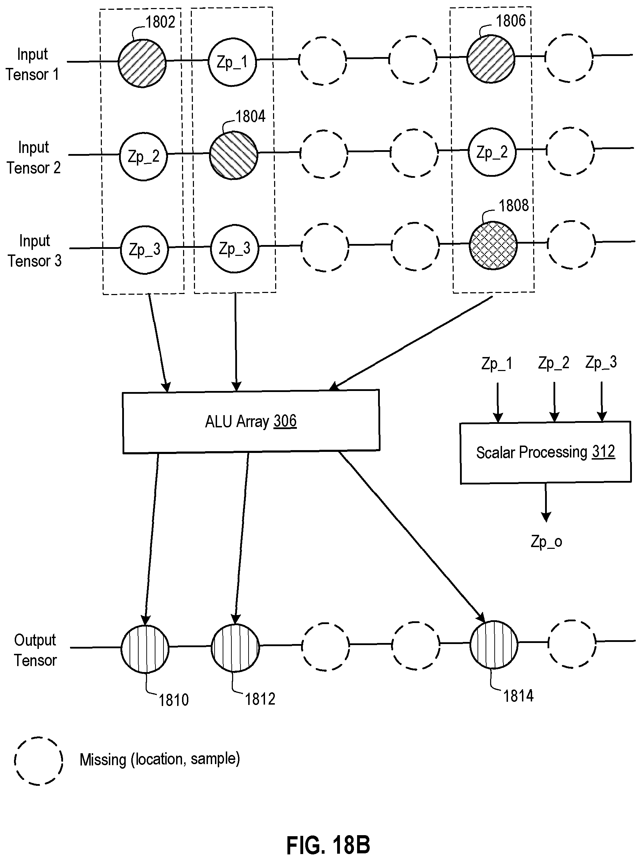

Fig. 18B is a block diagram illustrating the three sparse input tensors of Fig. 18A as processed by ML processor 18. At the first location, input tensor 1 includes sample 1802. At the first location, input tensors 2 and 3 are expanded to include zero-point samples (zp_2 and zp_3, respectively). At the second location, input tensor 2 includes sample 1804. At the second location, input tensors 1 and 3 are expanded to include zero-point samples (zp_1 and zp_3, respectively). At the third and fourth locations, none of the input tensors 1-3 have samples. At the fifth location, the input tensors 1 and 3 have samples 1806 and 1808, respectively. At the fifth location, the input tensor 2 is expanded to include zero-point sample zp_2. At the sixth location, none of the input tensors 1-3 have samples.

The first, second, and third expanded samples are applied to ALU array 306. It is implied that the third, fourth, and sixth locations of the output tensor will have a zero-point value zp_o. ALU array 306 outputs samples 1810, 1812, and 1814 in the first, second, and fifth locations. Asynchronous to processing by ALU array 306, scalar processing 312 determines the output zero-point value zp_0 from the input zero-point values zp_1, zp_2, and zp_3.

While some processes and methods having various operations have been described, one or more embodiments also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items. By way of example, the phrases "at least one of A, B, and C" or "at least one of A, B, or C" each refer to only A, only B, or only C; and/or any combination of A, B, and C. In instances where it is intended that a selection be of "at least one of each of A, B, and C," or alternatively, "at least one of A, at least one of B, and at least one of C," it is expressly described as such.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and/or steps do not imply any particular order of operation unless explicitly stated in the claims.

Boundaries between components, operations, and data stores are somewhat arbitrary in some embodiments, and particular operations are illustrated in the context of specific illustrative configurations. Other allocations of functionality are envisioned and may fall within the scope of the invention. In general, structures and functionalities presented as separate components in exemplary configurations may be implemented as a combined structure or component. Similarly, structures and functionalities presented as a single component may be implemented as separate components. These and other variations, additions, and improvements may fall within the scope of the appended claims.

**Claims**

1. A processor for machine learning calculations, comprising:

   an adapter input circuit operable to receive an input tensor, the adapter input circuit including channels, a first channel of the channels operable to process samples of the input tensor to generate pre-processed samples, the first channel operable to obtain locations of the samples;
   a location processor, coupled to the first channel, operable to determine output locations in response to the locations;
   an arithmetic logic unit (ALU), coupled to the channels, operable to calculate output samples from the pre-processed samples; and
   an adapter output circuit, coupled to the location processor and the ALU, operable to process the output locations and the output samples to generate an output tensor.

2. The processor of claim 1, wherein the input tensor is a sparse tensor associated with a zero-point value, and wherein the first channel expands the sparse tensor such that the pre-processed samples include the samples and other samples of the zero-point value.

3. The processor of claim 2, wherein a second channel of the channels generates dense locations being all locations within a tensor shape, wherein the locations of the samples obtained by the first channel are sparse locations within the tensor shape, wherein the location processor generates a control signal based on the dense locations and the sparse locations, and wherein the first channel expands the sparse tensor based on the control signal.

4. The processor of claim 3, wherein the adapter input circuit is operable to receive and process a dense tensor in the second channel, and/or
   wherein the second channel outputs constant value samples to the ALU.

5. The processor of any of claims 1 to 4, wherein:

   the input tensor is a first sparse tensor storing the samples, which are first samples, and the locations, which are first sparse locations within a tensor shape;
   a second channel of the channels is operable to receive a second sparse tensor storing second samples and second sparse locations within the tensor shape;
   the location processor is operable to determine the output locations as a union set of the first sparse locations and the second sparse locations, the location processor generating a control signal based on the union set; and
   wherein the first and second channels process the first and second samples, respectively, based on the control signal.

6. The processor of any of claims 1 to 5, wherein the input tensor is a first sparse tensor, wherein a second channel of the channels is operable to receive a second sparse tensor, wherein the first sparse tensor is associated with a first zero-point value and the second sparse tensor is associated with a second zero-point value, and wherein the ML processor comprises a controller operable to obtain an output zero-point value being a function of the first and second zero-point values.

7. The processor of any of claims 1 to 6, wherein the ALU is one of P ALUs coupled to the channels, P being an integer greater than zero, wherein the ALUs operate according to a clock signal, wherein the first channel processes a P-sample vector of the samples per cycle of the clock signal, and wherein the first channel obtains a P-location vector of the locations per cycle of the clock signal.

8. The processor of any of claims 1 to 7, wherein the output samples at the output locations are sparse within a tensor shape, and wherein the adapter output circuit includes a densifier circuit operable to expand the output samples to include samples of a zero-point value at those locations in the tensor shape excluded from the output locations, or wherein the output samples at the output locations are dense within a tensor shape, and wherein the adapter circuit includes a drop-box circuit operable to compress the output samples to remove samples within a predefined range.

9. A processor for machine learning calculations, comprising:

location grabbers to obtain tensor locations;
a location processor, coupled to outputs of the location grabbers, to generate output locations from the tensor locations;
sample grabbers to obtain tensor samples;
expanders, coupled to outputs of the sample grabbers, to align the tensor samples with the output locations;
arithmetic logic units (ALUs), coupled to outputs of the expanders, to calculate output samples from aligned tensor samples; and
an adapter output circuit, coupled to outputs of the ALUs and an output of the location processor, to generate an output tensor from the output locations and the output samples.

10. The processor of claim 9, wherein the location grabbers are coupled to a memory to read at least a portion of the tensor locations from the memory, and/or

wherein at least one of the location grabbers is operable to generate at least a portion of the tensor locations, and/or
wherein the sample grabbers are coupled to a memory to read the tensor samples from the memory.

11. The processor of claim 9 or 10, wherein the output samples at the output locations are sparse within a tensor shape, and wherein the adapter output circuit includes a densifier circuit operable to expand the output samples to include samples of a zero-point value at those locations in the tensor shape excluded from the output locations.

12. The processor of any of claims 9 to **11,** wherein the output samples at the output locations are dense within a tensor shape, and wherein the adapter circuit includes a drop-box circuit operable to compress the output samples to remove samples within a predefined range.

13. A method of processing an input tensor at a processor, the method comprising:

receiving at a first channel of channels in an adapter input circuit, the input tensor, the first channel processing samples of the input tensor to generate pre-processed samples, the first channel obtaining locations of the samples;
determining, by a location processor coupled to the first channel, output locations in response to the locations;
calculating, by an arithmetic logic unit (ALU) coupled to the channels, output samples from the pre-processed samples; and
processing, by an adapter output circuit coupled to the location processor and the ALU, the output locations and the output samples to generate an output tensor.

14. The method of claim 13, wherein the input tensor is a sparse tensor associated with a zero-point value, and wherein the first channel expands the sparse tensor such that the pre-processed samples include the samples and other samples of the zero-point value.

15. The method of claim 13 or 14, wherein the output samples at the output locations are sparse within a tensor shape, and wherein the adapter output circuit includes a densifier circuit expanding the output samples to include samples of a zero-point value at those locations in the tensor shape excluded from the output locations, or
wherein the output samples at the output locations are dense within a tensor shape, and wherein the adapter circuit includes a drop-box circuit compressing the output samples to remove samples within a predefined range.

100

Controller 10

Control Interface 14

Memory Interface 16

ML Processor 18

Sparse/Dense Tensor Processing Circuits 22

ALUs 24

Memory 20

Input Tensors 26

Output Tensors 28

Global Data 30

Accelerator 12

FIG. 1

Zero-point Value 252

Sparse Tensor 250

Vector 254

Ordered Pairs 256
(location , sample)

Dense Tensor 260

Array 262

Samples 264

**FIG. 2A**

Tensor Data Structure 202

Ordered Data Structure 212

Samples 214

Locations 206

Ordered Data Structure 204

Locations 206

Tensor Metadata 224

Tensor
Shape 218

Tensor
Size 220

Zero-point
Value 222

**FIG. 2B**

FIG. 3

**FIG. 4**

FIG. 5

FIG. 6

FIG. 7

FIG. 8

Buffer 904

Shift →

| ... | 902$_{P+2}$ | 902$_{P+1}$ | 902$_P$ | ... | 902$_2$ | 902$_1$ |

Rx[k]

... 

Location/Sample Vector k

**FIG. 9**

1010

Sample Vector

Px

Location Vector

Px

Range Detector 1100

Drop

/P

Switches 1102$_1$-1102$_P$

0    1

Switches 1104$_1$-1104$_P$

1    0

Range Control    Clock

Discard 1108

Px

Px

Discard 1108

Clock →

FIFOs 1106

Sample FIFO 1106S

Location FIFO 1106L

Px

Px

Sample Vector

Location Vector

**FIG. 11**

22B

Location Vector
(From L-FIFO)

Calculated Sample Vector
(From SO-FIFO)

S/D Adaptor
Output Control

Clock

64 | Px

63 | Px

70

72

66

68

64

63

64

63

| 1 0 |
| MUX 1002 |

| 1 0 |
| MUX 1004 |

| 1 0 |
| MUX 1006 |

| 1 0 |
| MUX 1008 |

L          S

Drop-Box 1010

L          S

66          68

L          S

Densifier 1012

L          S

70          72

64   66   70

| 2 1 0 |
| MUX 1014 |

63   68   72

| 2 1 0 |
| MUX 1016 |

OG 1020L

OG 1020S

Memory 20

**FIG. 10**

FIG. 12

FIG. 13

1400

Receive input tensors and tensor metadata — 1402

Set input handling of ML processor based on types of input tensors — 1404

Set for all sparse, mixed sparse and dense, or all dense input tensors — 1406

Set ALUs — 1408

Set output handling of ML processor based on desired output tensor — 1410

Sparse or dense output tensor — 1412

Optionally select thresholding — 1414

Process input tensors to generate output tensor — 1416

Expand sparse tensor(s) inline as required — 1418

Calculate zero-point value for output tensor asynchronously as required — 1420

Compress output tensor inline if selected (thresholding) — 1422

Expanded output tensor inline if selected — 1424

Store output tensor and metadata in memory — 1426

FIG. 14

| Receive sparse input tensor and metadata | 1502 |

↓

| Set input handling to sparse and ALUs to passthrough | 1504 |

↓

| Set output handling to densify | 1506 |

↓

| Process sparse input tensor into dense output tensor | 1508 |

↓

| Store dense output tensor | 1510 |

1500

**FIG. 15A**

| Receive dense input tensor and metadata | 1503 |

↓

| Set input handling to dense and ALUs to passthrough | 1505 |

↓

Set output handling to compress — 1507

| Set thresholding value(s) | 1509 |

| Determine zero-point value | 1511 |

↓

| Process dense input tensor into sparse output tensor | 1513 |

↓

| Store sparse tensor and metadata | 1515 |

1501

**FIG. 15B**

1600

```
┌─────────────────────────────────────────────┐
│   Receive sparse input tensors and metadata  │──── 1602
└─────────────────────────────────────────────┘
                      │
                      ▼
┌─────────────────────────────────────────────┐
│     Set used channels to handle sparse tensors│──── 1604
└─────────────────────────────────────────────┘
                      │
                      ▼
┌─────────────────────────────────────────────┐
│   Set unused channel to dense mode and void mode│──── 1606
│                                               │
│   ┌───────────────────────────────┐           │
│   │   Set void mode constant value │── 1608    │
│   └───────────────────────────────┘           │
│                                               │
└─────────────────────────────────────────────┘
                      │
                      ▼
┌─────────────────────────────────────────────┐
│                  Set ALUs                     │──── 1610
└─────────────────────────────────────────────┘
                      │
                      ▼
┌─────────────────────────────────────────────┐
│               Set output handling             │──── 1612
└─────────────────────────────────────────────┘
                      │
                      ▼
┌─────────────────────────────────────────────┐
│ Process sparse input tensors to generate output tensor│──── 1614
└─────────────────────────────────────────────┘
                      │
                      ▼
┌─────────────────────────────────────────────┐
│   Store output tensor and any associated metadata│──── 1616
└─────────────────────────────────────────────┘
```

FIG. 16

1700

Receive sparse input tensors and tensor metadata — 1702

Set input handling to sparse and output handling as desired — 1704

1706 — Process sparse input tensors to generate output tensor

Calculate zero-point value for output tensor from zero-point values of sparse input tensors — 1708

1710 — Store output tensor and any associated metadata

FIG. 17

Input Tensor 1

1802

1806

Input Tensor 2

1804

Input Tensor 3

1808

Missing (location, sample)

FIG. 18A

FIG. 18B

Europäisches
Patentamt
European
Patent Office
Office européen
des brevets

# EUROPEAN SEARCH REPORT

**Application Number**

EP 25 17 3981

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 11 586 601 B2 (ALIBABA GROUP HOLDING LTD [KY]) 21 February 2023 (2023-02-21) * column 12, line 35 - column 15, line 60; figures 5A, 5B * | 1-15 | INV. G06F7/57 G06N20/00 |
| A | US 2022/108156 A1 (HUNTER KEVIN LEE [US] ET AL) 7 April 2022 (2022-04-07) * paragraph [0068] - paragraph [0082]; figure 3 * | 1-15 | |
| A | US 2022/012578 A1 (BRADY KEVIN [GB] ET AL) 13 January 2022 (2022-01-13) * paragraphs [0057] - [0058], [0071] - [0073]; figure 2 * * paragraph [0099] - paragraph [0104]; figure 11 * | 1-15 | |
| A | SHAIL DAVE ET AL: "Hardware Acceleration of Sparse and Irregular Tensor Computations of ML Models: A Survey and Insights", ARXIV.ORG, CORNELL UNIVERSITY LIBRARY, 201 OLIN LIBRARY CORNELL UNIVERSITY ITHACA, NY 14853, 22 July 2021 (2021-07-22), XP081999518, * section IV and VI * | 1-15 | TECHNICAL FIELDS SEARCHED (IPC) G06F G06N |

The present search report has been drawn up for all claims

| Place of search | Date of completion of the search | Examiner |
|---|---|---|
| Munich | 29 August 2025 | Prins, Leendert |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 17 3981

This annex lists the patent family members relating to the patent documents cited in the above-mentioned European search report.
The members are as contained in the European Patent Office EDP file on
The European Patent Office is in no way liable for these particulars which are merely given for the purpose of information.

29-08-2025

| Patent document cited in search report | | Publication date | Patent family member(s) | | Publication date |
|---|---|---|---|---|---|
| US 11586601 | B2 | 21-02-2023 | CN | 115066692 A | 16-09-2022 |
| | | | US | 2021240684 A1 | 05-08-2021 |
| | | | WO | 2021158374 A1 | 12-08-2021 |
| US 2022108156 | A1 | 07-04-2022 | NONE | | |
| US 2022012578 | A1 | 13-01-2022 | CN | 117616426 A | 27-02-2024 |
| | | | EP | 4405861 A1 | 31-07-2024 |
| | | | JP | 2024536663 A | 08-10-2024 |
| | | | US | 2022012578 A1 | 13-01-2022 |
| | | | WO | 2023048824 A1 | 30-03-2023 |

EPO FORM P0459

For more details about this annex : see Official Journal of the European Patent Office, No. 12/82